# EUROPEAN PATENT APPLICATION

(11) **EP 4 848 811 A1**
(43) Date of publication of application: **02.12.2026**
(21) Application number: 25751635.1
(22) Date of filing: 07.02.2025
(51) Int. Cl.: H04W 36/00

(54) **COMMUNICATION METHOD AND APPARATUS**

(30) Priority: 08.02.2024 CN 202410177032
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN); WANG, Fanfan, Shenzhen, Guangdong 518129 (CN); HAN, Feng, Shenzhen, Guangdong 518129 (CN); WANG, Yan, Shenzhen, Guangdong 518129 (CN)
(74) Representative: Thun, Clemens
(86) International application number: PCT/CN2025/076137
(87) International publication number: WO 2025/168036

(57) **Abstract**

A communication method and apparatus are provided. In the communication method, a second network device receives user plane tunnel address information of a third network device, where the information is sent by a first network device. The second network device sends data corresponding to a terminal device to the third network device based on the user plane tunnel address information of the third network device. The first network device is a source network device for a 1^{st} handover of the terminal device, the second network device is a target network device for the 1^{st} handover of the terminal device, and the third network device is a target network device for a 2^{nd} handover of the terminal device. Therefore, for the 2^{nd} handover of the terminal device, the second network device can send data corresponding to the terminal device to the third network device based on the user plane tunnel address information of the third network device, so that the third network device can transmit the data corresponding to the terminal device when the terminal device successfully accesses the third network device, thereby ensuring service continuity.

## Description

This application claims priority to Chinese Patent Application No. 202410177032.2, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, movement of a terminal device may trigger a cell handover. When the source cell and the target cell involved in the handover are managed by different network devices, the network device providing service for the terminal device needs to be switched from a source network device to a target network device. The source network device is the network device that manages the source cell, and the target access network device is the network device that manages the target cell. For mobility management technologies that support subsequent handovers or multiple handovers, how to implement service continuity during subsequent or multiple handovers still needs to be studied.

### SUMMARY

Embodiments of this application provide a communication method and apparatus, enabling a source network device to send data corresponding to a terminal device to a target network device during subsequent or multiple handovers, thereby ensuring service continuity.

According to a first aspect, this application provides a communication method. The method may be applied to a second network device, or may be applied to a chip in the second network device, or may be applied to a logical module or software that can implement all or a part of functions of the second network device. The following uses the second network device as an example for description. The method includes: The second network device receives user plane tunnel address information of a third network device from a first network device. The second network device sends data corresponding to a terminal device to the third network device based on the user plane tunnel address information of the third network device. The first network device is a source network device for a 1^{st} handover of the terminal device, the second network device is a target network device for the 1^{st} handover of the terminal device, and the third network device is a target network device for a 2^{nd} handover of the terminal device.

It can be learned that, in the method, the source network device (that is, the first network device) for the 1^{st} handover of the terminal device sends the user plane tunnel address information of the third network device to the second network device, so that for the 2^{nd} handover of the terminal device, the second network device can send the data corresponding to the terminal device to the third network device based on the user plane tunnel address information of the target network device (that is, the third network device) for the 2^{nd} handover of the terminal device, and the third network device can transmit the data corresponding to the terminal device when the terminal device successfully accesses the third network device, thereby ensuring service continuity.

In an optional implementation, the user plane tunnel address information of the third network device includes user plane tunnel address information corresponding to each of one or more cells managed by the third network device.

Optionally, that the second network device sends the data corresponding to the terminal device to the third network device based on the user plane tunnel address information of the third network device includes: The second network device sends the data corresponding to the terminal device to the third network device based on tunnel address information corresponding to a third cell, where the third cell is a target cell for the 2^{nd} handover of the terminal device.

In an optional implementation, the user plane tunnel address information of the third network device is carried in first information. The first information further includes identifier information of the third network device or identifier information of each of the one or more cells managed by the third network device.

It can be learned that, in the method, the second network device receives the first information from the first network device, where the first information includes the user plane tunnel address information of the third network device, and the identifier information of the third network device or the identifier information of each of the one or more cells managed by the third network device.

In an optional implementation, the first network device and the third network device are a same network device.

In an optional implementation, the method further includes: The second network device receives identifier information of a first cell and/or identifier information of the first network device from the terminal device, where the first cell is a source cell for the 1^{st} handover of the terminal device. The second network device sends second information to the first network device, where the second information indicates that the terminal device has been handed over from the first network device to the second network device.

It can be learned that, in the method, the second network device may determine, based on the identifier information of the first cell and/or the identifier information of the first network device sent by the terminal device, that the source network device for the 1^{st} handover of the terminal device is the first network device, and then send the second information to the first network device, so that the first network device can learn, based on the second information, that the target network device for the 1^{st} handover of the terminal device is the second network device, and then send the data corresponding to the terminal device to the second network device based on the user plane tunnel address information of the second network device. This helps ensure the service continuity.

In an optional implementation, the method further includes: The second network device sends third information to the third network device when the terminal device has been handed over from the first network device to the second network device, where the third information indicates that a network device currently serving the terminal device is the second network device. In this implementation, when the terminal device is performing the 2^{nd} handover, the third network device can determine that a source network device for the 2^{nd} handover of the terminal device is the second network device, so that the third network device can send seventh information to the second network device, where the seventh information indicates that the terminal device has been handed over from the second network device to the third network device.

In an optional implementation, the user plane tunnel address information of the third network device is carried in fourth information. The fourth information is for notifying the second network device that the terminal device is about to be handed over from the first network device to the second network device.

In other words, in the method, the second network device receives the fourth information from the first network device, where the fourth information is for notifying the second network device that the terminal device is about to be handed over from the first network device to the second network device, and the fourth information includes the user plane tunnel address information of the third network device. It can be learned that, in the method, when the terminal device is about to be handed over from the first network device to the second network device, the first network device may send the user plane tunnel address information of the third network device to the target network device (that is, the second network device) for the 1^{st} handover of the terminal device.

In an optional implementation, before the second network device sends the data corresponding to the terminal device to the third network device based on the user plane tunnel address information of the third network device, the method further includes: The second network device determines that the terminal device is about to be handed over from the second network device to the third network device; or the second network device determines that the terminal device has been handed over from the second network device to the third network device.

In an optional implementation, that the second network device determines that the terminal device is about to be handed over from the second network device to the third network device includes: When the second network device has sent fifth information to the terminal device, the second network device determines that the terminal device is about to be handed over from the second network device to the third network device. The fifth information indicates the terminal device to perform handover to the third cell, and the third cell is the target cell for the 2^{nd} handover of the terminal device.

In an optional implementation, that the second network device determines that the terminal device is about to be handed over from the second network device to the third network device includes: When the second network device has received sixth information from the terminal device, the second network device determines that the terminal device is about to be handed over from the second network device to the third network device. The sixth information indicates that the terminal device is about to be handed over from the second network device to the third network device.

In an optional implementation, the sixth information includes the identifier information of the third cell and/or the identifier information of the third network device, and the third cell is the target cell for the 2^{nd} handover of the terminal device.

In an optional implementation, that the second network device determines that the terminal device has been handed over from the second network device to the third network device includes: When the second network device has received seventh information from the third network device, the second network device determines that the terminal device has been handed over from the second network device to the third network device. The seventh information indicates that the terminal device has been handed over from the second network device to the third network device.

In an optional implementation, the method further includes: When the terminal device has been handed over to the second network device, the second network device sends the data corresponding to the terminal device to the third network device based on the user plane tunnel address information of the third network device.

It can be learned that, in the method, before the terminal device is about to be handed over from the second network device to the third network device, the second network device forwards the data corresponding to the terminal device to the third network device, so that the third network device can transmit the data obtained in advance when the terminal device has been handed over to the third network device, thereby ensuring the service continuity.

According to a second aspect, this application provides a communication method. The method may be applied to a first network device, or may be applied to a chip in the first network device, or may be applied to a logical module or software that can implement all or a part of functions of the first network device. The following uses the first network device as an example for description. The method includes: The first network device obtains user plane tunnel address information of a third network device; and the first network device sends the user plane tunnel address information of the third network device to a second network device. The user plane tunnel address information of the third network device is for data forwarding during a 2^{nd} handover of a terminal device. The first network device is a source network device for a 1^{st} handover of the terminal device, the second network device is a target network device for the 1^{st} handover of the terminal device, and the third network device is a target network device for the 2^{nd} handover of the terminal device.

It can be learned that, in the method, the source network device (that is, the first network device) for the 1^{st} handover of the terminal device sends the user plane tunnel address information of the third network device to the second network device, so that for the 2^{nd} handover of the terminal device, the second network device can send data corresponding to the terminal device to the third network device based on the user plane tunnel address information of the target network device (that is, the third network device) for the 2^{nd} handover, and the third network device can transmit the data corresponding to the terminal device when the terminal device successfully accesses the third network device, thereby ensuring service continuity.

In an optional implementation, the user plane tunnel address information of the third network device includes user plane tunnel address information corresponding to each of one or more cells managed by the third network device.

In an optional implementation, the user plane tunnel address information of the third network device is carried in first information. The first information further includes identifier information of the third network device or identifier information of each of the one or more cells managed by the third network device.

It can be learned that, in the method, the first network device sends the first information to the second network device, where the first information includes the user plane tunnel address information of the third network device, and the identifier information of the third network device or the identifier information of each of the one or more cells managed by the third network device.

In an optional implementation, the first network device and the third network device are a same network device; and that the first network device obtains the user plane tunnel address information of the third network device includes: The first network device locally obtains the user plane tunnel address information of the third network device.

In an optional implementation, the first network device and the third network device are different network devices; and that the first network device obtains the user plane tunnel address information of the third network device includes: The first network device receives the user plane tunnel address information of the third network device that is sent by the third network device.

In an optional implementation, the method further includes: The first network device receives user plane tunnel address information of the second network device that is sent by the second network device; and the first network device sends the user plane tunnel address information of the second network device to the third network device. The user plane tunnel address information of the second network device is for data forwarding during a 3^{rd} handover of the terminal device. A target network device for the 3^{rd} handover of the terminal device is the second network device. This implementation helps the third network device send the data corresponding to the terminal device to the second network device based on the user plane tunnel address information of the second network device when the terminal device is about to be handed over from the third network device to the second network device, or when the terminal device has been handed over from the third network device to the second network device, so that the second network device can transmit the data corresponding to the terminal device when the terminal device has been handed over from the third network device to the second network device, thereby ensuring the service continuity.

In an optional implementation, the method further includes: The first network device receives eighth information from the terminal device, where the eighth information indicates that the terminal device is about to be handed over from the first network device to the second network device. The first network device sends the data corresponding to the terminal device to the second network device based on the user plane tunnel address information of the second network device. This implementation helps the second network device transmit the data corresponding to the terminal device when the terminal device has been handed over from the first network device to the second network device, thereby ensuring the service continuity.

In an optional implementation, the eighth information includes identifier information of a second cell and/or identifier information of the second network device, and the second cell is a target cell for the 1^{st} handover of the terminal device.

In an optional implementation, before the first network device sends the user plane tunnel address information of the third network device to the second network device, the method further includes: The first network device receives second information from the second network device, where the second information indicates that the terminal device has been handed over from the first network device to the second network device. It can be learned that, in the method, the first network device may determine, based on the second information, that the target network device for the 1^{st} handover of the terminal device is the second network device, and then send the user plane tunnel address information of the third network device to the target network device (that is, the second network device) for the 1^{st} handover of the terminal device.

In an optional implementation, the user plane tunnel address information of the third network device is carried in fourth information. The fourth information is for notifying the second network device that the terminal device is about to be handed over from the first network device to the second network device.

In other words, in the method, the first network device sends the fourth information to the second network device, where the fourth information is for notifying the second network device that the terminal device is about to be handed over from the first network device to the second network device, and the fourth information includes the user plane tunnel address information of the third network device. It can be learned that, in the method, the first network device sends the user plane tunnel address information of the third network device to the target network device (that is, the second network device) for the 1^{st} handover of the terminal device.

According to a third aspect, this application provides a communication method. The method may be applied to a third network device, or may be applied to a chip in the third network device, or may be applied to a logical module or software that can implement all or a part of functions of the third network device. The following uses the third network device as an example for description. The method includes: The third network device sends seventh information to a second network device, where the seventh information indicates that a terminal device has been handed over from the second network device to the third network device, and the seventh information includes user plane tunnel address information of the third network device. The third network device receives data corresponding to the terminal device that is sent by the second network device based on the user plane tunnel address information of the third network device. The second network device is a source network device for a 2^{nd} handover of the terminal device, and the third network device is a target network device for the 2^{nd} handover of the terminal device.

It can be learned that, in the method, the seventh information sent by the third network device to the second network device further carries the user plane tunnel address information of the third network device, so that the second network device can send the data corresponding to the terminal device to the third network device based on the user plane tunnel address information of the third network device, and the third network device can transmit the data corresponding to the terminal device, thereby ensuring service continuity.

According to a fourth aspect, this application provides a communication method. The method may be applied to a second network device, or may be applied to a chip in the second network device, or may be applied to a logical module or software that can implement all or a part of functions of the second network device. The following uses the second network device as an example for description. The method includes: The second network device receives seventh information from a third network device, where the seventh information indicates that a terminal device has been handed over from the second network device to the third network device, and the seventh information includes user plane tunnel address information of the third network device. The second network device sends data corresponding to the terminal device to the third network device based on the user plane tunnel address information of the third network device. The second network device is a source network device for a 2^{nd} handover of the terminal device, and the third network device is a target network device for the 2^{nd} handover of the terminal device.

It can be learned that, in the method, the seventh information received by the second network device further carries the user plane tunnel address information of the third network device, so that the second network device can send the data corresponding to the terminal device to the third network device based on the user plane tunnel address information of the third network device, and the third network device can transmit the data corresponding to the terminal device, thereby ensuring service continuity.

According to a fifth aspect, this application further provides a communication apparatus. The communication apparatus may be a second network device, or may be a chip in the second network device, or may be a logical module or software that can implement all or a part of functions of the second network device. The communication apparatus has a function of implementing a part or all of the implementations of the first aspect. Alternatively, the communication apparatus may be a first network device, or may be a chip in the first network device, or may be a logical module or software that can implement all or a part of functions of the first network device. The communication apparatus has a function of implementing a part or all of the implementations in the second aspect. The function may be implemented by hardware, or may be implemented by hardware executing corresponding software. The hardware or the software includes one or more units or modules corresponding to the functions.

In a possible design, a structure of the communication apparatus may include a processing unit. The processing unit is configured to support the communication apparatus in performing a corresponding function in the foregoing methods. Optionally, the communication apparatus further includes a communication unit. The communication unit is configured to support communication between the communication apparatus and another communication apparatus. Optionally, the communication apparatus may further include a storage unit. The storage unit is configured to be coupled to the processing unit and the communication unit. The storage unit stores program instructions and data that are necessary for the communication apparatus. In addition, the processing unit may be configured to control the communication unit to perform data/signaling receiving/sending.

In an implementation, the communication unit is configured to receive user plane tunnel address information of a third network device from the first network device. The communication unit is further configured to send data corresponding to a terminal device to the third network device based on the user plane tunnel address information of the third network device. The first network device is a source network device for a 1^{st} handover of the terminal device, the communication apparatus is a target network device for the 1^{st} handover of the terminal device, and the third network device is a target network device for a 2^{nd} handover of the terminal device.

In addition, for another optional implementation of the communication apparatus in this aspect, refer to related content in the second aspect. Details are not described herein again.

In another implementation, the processing unit is configured to obtain user plane tunnel address information of a third network device. The communication unit is configured to send the user plane tunnel address information of the third network device to a second network device, where the user plane tunnel address information of the third network device is for data forwarding during a 2^{nd} handover of a terminal device. The communication apparatus is a source network device for a 1^{st} handover of the terminal device, the second network device is a target network device for the 1^{st} handover of the terminal device, and the third network device is a target network device for the 2^{nd} handover of the terminal device.

In addition, for another optional implementation of the communication apparatus in this aspect, refer to related content in the second aspect. Details are not described herein again.

In an example, the communication unit may be a transceiver or a communication interface, the storage unit may be a memory, and the processing unit may be a processor. The processor is coupled to the memory. The memory is configured to store a program or instructions. The processor may be configured to enable, when the program or the instructions are executed by the processor, the communication apparatus to perform the method according to the first aspect. The transceiver or the communication interface may be configured to receive/send signals and/or data.

In an implementation, the transceiver is configured to receive user plane tunnel address information of a third network device from a first network device. The transceiver is further configured to send data corresponding to a terminal device to the third network device based on the user plane tunnel address information of the third network device. The first network device is a source network device for a 1^{st} handover of the terminal device, the communication apparatus is a target network device for the 1^{st} handover of the terminal device, and the third network device is a target network device for a 2^{nd} handover of the terminal device.

In addition, for another optional implementation of the communication apparatus in this aspect, refer to related content in the first aspect. Details are not described herein again.

In another implementation, the processor is configured to obtain user plane tunnel address information of a third network device. The transceiver is configured to send the user plane tunnel address information of the third network device to a second network device, where the user plane tunnel address information of the third network device is for data forwarding during a 2^{nd} handover of a terminal device. The communication apparatus is a source network device for a 1^{st} handover of the terminal device, the second network device is a target network device for the 1^{st} handover of the terminal device, and the third network device is a target network device for the 2^{nd} handover of the terminal device.

In addition, for another optional implementation of the communication apparatus in this aspect, refer to related content in the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving/sending. The foregoing components may be separately disposed on chips that are independent of each other, or at least a part or all of the components may be disposed on a same chip. For example, the processor may be divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system-on-a-chip (system-on-a-chip, SoC). Whether components are independently disposed on different chips or are integrated and disposed on one or more chips usually depends on requirements of a product design. This embodiment of this application imposes no limitation on specific implementations of the foregoing components.

According to a sixth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of inputting the foregoing information by the processor. When outputting the foregoing information, the processor outputs the foregoing information to the transceiver, so that the transceiver (or the communication interface) transmits the foregoing information. After the foregoing information is outputted by the processor, other processing may further need to be performed on the foregoing information before the foregoing information arrives at the transceiver (or the communication interface). Similarly, when the processor receives the foregoing input information, the transceiver (or the communication interface) receives the foregoing information, and inputs the foregoing information to the processor. Further, after the transceiver (or the communication interface) receives the foregoing information, other processing may need to be performed on the foregoing information before the foregoing information is input to the processor.

Unless otherwise specified, or if operations such as sending and receiving related to the processor do not contradict actual functions or internal logic of the operations in related descriptions, all the operations may be more generally understood as operations such as output, receiving, and input of the processor, instead of sending and receiving operations directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a seventh aspect, this application further provides a communication system. The system includes an apparatus configured to perform the method according to the first aspect and an apparatus configured to perform the method according to the second aspect. In another possible design, the system may further include another device that interacts with the apparatus configured to perform the method according to the first aspect, and/or another device that interacts with the apparatus configured to perform the method according to the second aspect.

According to an eighth aspect, this application provides a computer-readable storage medium. The computer-readable storage medium stores a computer program. When the computer program is run, the method according to the first aspect or the second aspect is performed.

According to a ninth aspect, this application further provides a computer program product including instructions. The computer program product includes computer program code. When the computer program code is run, the method according to the first aspect or the second aspect is performed.

According to a tenth aspect, this application provides a chip system. The chip system includes a processor and an interface. The interface is configured to obtain a program or instructions, and the processor is configured to invoke the program or the instructions to implement a function related to the first aspect or the second aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a system architecture;
FIG. 2 is a diagram of a communication system according to an embodiment of this application;
FIG. 3 is a diagram of triggering a handover by a network device according to an embodiment of this application;
FIG. 4A and FIG. 4B are a diagram of triggering a handover by a terminal device according to an embodiment of this application;
FIG. 5 is a schematic flowchart of a communication method 100 according to an embodiment of this application;
FIG. 6A and FIG. 6B are a diagram of another communication method according to an embodiment of this application;
FIG. 7A to FIG. 7C are a diagram of another communication method according to an embodiment of this application;
FIG. 8A to FIG. 8C are a diagram of another communication method according to an embodiment of this application;
FIG. 9A to FIG. 9C are a diagram of another communication method according to an embodiment of this application;
FIG. 10A and FIG. 10B are a diagram of another communication method according to an embodiment of this application;
FIG. 11A to FIG. 11C are a diagram of another communication method according to an embodiment of this application;
FIG. 12A to FIG. 12C are a diagram of another communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes embodiments of this application with reference to accompanying drawings in embodiments of this application.

The technical solutions in embodiments of this application may be applied to various communication systems, for example, a global system for mobile communication, a long term evolution (long term evolution, LTE) system, a universal mobile telecommunications system, a 4th generation (4th generation, 4G) mobile communication system, a 4.5th generation (4.5th generation, 4.5G) mobile communication system, and a 5th generation (5th generation, 5G) mobile communication system. In addition, with continuous development of communication technologies, the technical solutions in embodiments of this application may be further applied to a subsequent evolved communication system, for example, a 6th generation (6th generation, 6G) mobile communication system or a 7th generation (7th generation, 7G) mobile communication system. The technical solutions in embodiments of this application may be further applied to a universal mobile telecommunications system (universal mobile telecommunications system, UMTS), a code division multiple access (code division multiple access, CDMA) system, a wireless local area network (wireless local area network, WLAN), and the like.

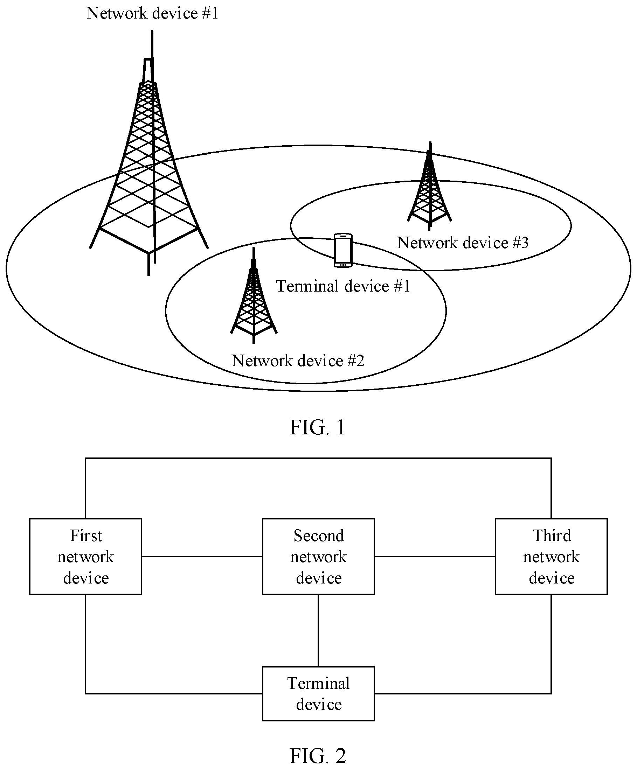

Embodiments of this application provide a communication system. The communication system includes a network device and a terminal device. The terminal device is located in coverage of one or more cells (carriers) managed by the network device, and there may be one or more cells serving the terminal device. When there are a plurality of cells serving the terminal device, the terminal device may operate in a carrier aggregation (carrier aggregation, CA), dual connectivity (dual connectivity, DC), or coordinated multipoint transmission manner. At least one of the plurality of cells may provide at least two numerologies (numerologies) for the terminal device, to provide radio resources for the terminal device. For example, as shown in FIG. 1, the terminal device is located in coverage of a cell managed by a network device #1, a cell managed by a network device #2, and a cell managed by a network device #3. In FIG. 1, the network device #1 may be, for example, a macro base station (macro evolved NodeB, macro eNB, or macro e-NodeB), and the network device #2 and the network device #3 may be, for example, micro base stations (small eNB or small e-NodeB).

FIG. 2 is a diagram of a communication system according to an embodiment of this application. The communication system includes a terminal device, a first network device, a second network device, and a third network device. The first network device is a source network device for a 1^{st} handover of the terminal device. The second network device is a target network device for the 1^{st} handover of the terminal device. It may be understood that the second network device is also a source network device for a 2^{nd} handover of the terminal device. The third network device is a target network device for the 2^{nd} handover of the terminal device. The 1^{st} handover may be, for example, the 1^{st} handover after the terminal device initially accesses a network, or the N^{th} handover after the terminal device initially accesses the network, where N is an integer greater than 1. The 2^{nd} handover is a next handover performed by the terminal device after the 1^{st} handover.

The first network device is configured to manage a first cell, and the first cell is a source cell for the 1^{st} handover of the terminal device. The second network device is configured to manage a second cell, and the second cell is a target cell for the 1^{st} handover of the terminal device. It may be understood that the second cell is also a source cell for the 2^{nd} handover of the terminal device. The third network device is configured to manage a third cell, and the third cell is a target cell for the 2^{nd} handover of the terminal device.

In addition, the third network device and the first network device may be different network devices, or the third network device and the first network device may be a same network device. FIG. 2 illustrates an example in which the third network device and the first network device are different network devices.

Optionally, the communication system may further include another network device different from the first network device, the second network device, and the third network device. For example, the communication system may further include a fourth network device, a fifth network device, and the like. For example, the another network device that may be further included in the communication system may be another candidate network device for the 1^{st} handover of the terminal device. For example, the third network device and the first network device are different network devices, candidate network devices for the 1^{st} handover of the terminal device include the second network device, the third network device, and the fourth network device, and the target network device for the 1^{st} handover of the terminal device is the second network device in all the candidate network devices for the 1^{st} handover of the terminal device.

In embodiments of this application, the terminal device may also be referred to as user equipment (user equipment, UE), a terminal, an access terminal, a subscriber unit, a subscriber station, a mobile station (mobile station, MS), a mobile terminal (mobile terminal, MT), a remote station, a remote terminal, a mobile device, a user terminal, a user agent, or a user apparatus, and may be applied to a 4G system, a 5G system, even a 6G system, or the like. The terminal device may provide voice and/or data connectivity for a user. The terminal device may be a joint device that transmits and receives digital signals on an ordinary telephone line, or may be the handheld device or a vehicle-mounted device having a wireless connection function, or may be a cellular phone, a cordless phone, a session initiation protocol (session initiation protocol, SIP) phone, a wireless local loop (wireless local loop, WLL) station, a personal digital assistant (personal digital assistant, PDA), a mobile phone (mobile phone), a tablet computer (pad), a notebook computer, a palmtop computer, a computer with a wireless transceiver function, a mobile internet device (mobile internet device, MID), a wearable device, a head-mounted display (head-mounted display, HMD), a virtual reality (virtual reality, VR) device (for example, VR glasses), an augmented reality (augmented reality, AR) device (for example, AR glasses), a mixed reality (mixed reality, MR) device, a wireless terminal in industrial control (industrial control), a processing device connected to a wireless modem, a tactile terminal device, a vehicle-mounted device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a road side unit (road side unit, RSU) of the foregoing wireless terminal type, or the like.

The network device may be an access network device. The access network device is a radio access network (radio access network, RAN) node (or device) that connects the terminal device to a wireless network. The network device includes but is not limited to: a base station (base station, BS), a radio network controller (radio network controller, RNC), a base station controller (base station controller, BSC), a network device transceiver station (base transceiver station, BTS), a home base station (for example, a home evolved NodeB, or a home NodeB, HNB), a baseband unit (baseband unit, BBU), an access point (access point, AP) in wireless fidelity (wireless fidelity, Wi-Fi), a wireless relay node, a wireless backhaul node, a transmission point (transmission and reception point, TRP; or transmission point, TP). The base station is an apparatus that can provide a wireless communication function and that is deployed in a radio access network. The base station may also be referred to as a base station device, for example, an evolved NodeB (evolved NodeB, eNB or e-NodeB) in an LTE system, a NodeB (NodeB, NB), a base station (gNodeB or gNB) in the 5G system, or a base station in the 6G system. The base station may include a BBU and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. The base station may be in the following forms: a macro base station, a micro base station (also referred to as a small cell), a pico base station, a relay station, an access point, a balloon station, and the like.

Optionally, in some deployments of the access network device, the access network device may include a central unit (central unit, CU) and/or a distributed unit (distributed unit, DU). When the access network device includes the CU and the DU, a protocol layer of the eNB in the LTE system is split. Functions of a part of the protocol layer are controlled by the CU in a centralized manner, and functions of a part or all of the remaining protocol layer are distributed in the DU. The CU controls the DU in a centralized manner. In some deployments of the access network device, the CU may be further divided into a CU-control plane (control plane, CP), a CU-user plane (user plane, UP), and the like. In some other deployments of the access network device, the access network device may alternatively be an open radio access network (open radio access network, ORAN) architecture or the like. A specific deployment manner of the access network device is not limited in this application.

Network architectures described in embodiments of this application are intended to more clearly describe the technical solutions in embodiments of this application, and does not constitute a limitation on the technical solutions provided in embodiments of this application. With evolution of the network architecture and emergence of a new service scenario, the technical solutions provided in embodiments of this application are also applicable to similar technical problems.

The following describes related concepts in embodiments of this application.

### 1. Source network device, target network device, source cell, target cell, candidate cell, and candidate network device

For a handover of a terminal device, a network device serving the terminal device before the current handover of the terminal device is a source network device, a cell accessed by the terminal device before the current handover is a source cell, and the source cell is managed by the source network device; and a network device serving the terminal device after the current handover of the terminal device is a target network device, a cell accessed by the terminal device after the current handover is a target cell, and the target cell is managed by the target network device.

For example, a network device serving the terminal device before the terminal device performs a 1^{st} handover is a first network device, and a cell accessed by the terminal device before the 1^{st} handover is a first cell. After the 1^{st} handover of the terminal device and before a 2^{nd} handover of the terminal device, a network device serving the terminal device is a second network device. A cell accessed by the terminal device after the 1^{st} handover and before the 2^{nd} handover is a second cell. It can be learned that the first network device is a source network device for the 1^{st} handover of the terminal device, and the first cell is a source cell for the 1^{st} handover of the terminal device. The second network device is a target network device for the 1^{st} handover of the terminal device, and the second cell is a target cell for the 1^{st} handover of the terminal device.

A candidate cell is a cell to which the terminal device may be handed over from a current serving cell. The candidate cell may be a neighboring cell of the current serving cell of the terminal device. There may be one or more candidate cells, and one of the one or more candidate cells is used as a target cell to which the terminal device performs handover from the current serving cell. For example, the current serving cell of the terminal device is a cell #1, candidate cells to which the terminal device may perform handover from the cell #1 are a cell #2 and a cell #3, and the cell #2 is used as a target cell to which the terminal device performs handover from the cell #1.

A candidate network device is a network device that manages the candidate cell. For example, a current serving network device of the terminal device is a network device #1, and a current serving cell of the terminal device is a cell #1 managed by the network device #1. Both a cell #2 managed by a network device #2 and a cell #3 managed by a network device #3 are candidate cells to which the terminal device performs handover from the cell #1. If the cell #2 is a target cell to which the terminal device performs handover from the cell #1, the network device #2 is a target network device to which the terminal device performs handover from the network device #1.

### 2. "Is about to be handed over to", "is performing handover to", and "has been handed over to"

That a terminal device is about to be handed over from a source network device to a target network device (UE is about to switch from the source network device to the target network device) means that an identity of the target network device has been determined, and the terminal device has not performed a handover operation. For example, the terminal device has been indicated or is to be indicated to perform handover from the source network device to the target network device, so that it can be determined that the terminal device is about to be handed over from the source network device to the target network device. In addition, in a scenario in which the terminal device is about to be handed over from the source network device to the target network device, the terminal device has not established a connection to the target network device, and the terminal device may still communicate with the source network device. For example, in a scenario in which the terminal device is about to be handed over from a first network device to a second network device, the terminal device has not established a connection to the second network device, and the terminal device may still communicate with the first network device.

That a terminal device is performing handover from a source network device to a target network device (UE is performing handover from the source network device to the target network device) means that an identity of the target network device has been determined, and the terminal device and the target network device are performing a handover operation. For example, that the terminal device is performing handover from a first network device to a second network device indicates that the terminal device and the second network device are performing a handover operation.

That a terminal device has been handed over from a source network device to a target network device (UE has been handed over from the source network device to the target network device) means that an identity of the target network device has been determined, and the terminal device and the target network device have successfully performed handover, that is, the terminal device successfully accesses the target network device. For example, that the terminal device has been handed over from a first network device to a second network device indicates that the terminal device has successfully established a connection to the second network device, that is, the terminal device successfully accesses the second network device.

### 3. Handover command

In an optional implementation, a source network device may send a handover command to a terminal device, to instruct the terminal device to perform handover to a target cell.

For example, the handover command may be carried in a medium access control control element (media access control control element, MAC CE), or may be carried in downlink control information (downlink control information, DCI), or may be carried in a radio resource control (radio resource control, RRC) message. A specific signaling carrying manner is not limited in this application. In a case of an L1/L2 triggered mobility (L1/L2 triggered mobility, LTM) handover, the handover command may be an LTM handover command (LTM handover command, LTM HO CMD).

Optionally, the handover command includes identifier information of the target cell, so that the terminal device can determine the target cell based on the identifier information of the target cell in the handover command, and the terminal device can be handed over to the target cell based on configuration information of the target cell. For example, the handover command instructs the terminal device to perform handover to a cell #1, and the handover indication further includes identifier information of the cell #1, so that the terminal device can determine, based on the identifier information of the cell #1 in the handover command, that the target cell is the cell #1, and the terminal device can perform handover to the cell #1 based on configuration information of the cell #1.

### 4. User plane tunnel address information

The user plane tunnel address information may be, for example, uplink user plane tunnel address information and/or downlink user plane tunnel address. The uplink user plane tunnel address information may be, for example, uplink user plane transport network layer information (user plane transport network layer information, UP TNL information), and the downlink user plane tunnel address information may be, for example, downlink UP TNL information. The uplink UP TNL information may include, for example, one or more of the following: an uplink transport layer address or an uplink general packet radio system (general packet radio system, GPRS) tunneling protocol-tunnel endpoint identifier (GPRS tunneling protocol-tunnel endpoint identifier, GTP-TEID). The downlink UP TNL information may include, for example, one or more of the following: a downlink transport layer address or a downlink GTP-TEID. The transport layer address is, for example, an internet protocol (internet protocol, IP) address. In addition, the user plane tunnel address information may also be referred to as user plane data tunnel address information.

In an optional manner, the user plane tunnel address information is on a protocol data unit (protocol data unit, PDU) session (PDU session) level. For example, the user plane tunnel address information is the uplink UP TNL information and/or downlink UP TNL information, a terminal device currently has a plurality of PDU sessions for service transmission with a core network, and a set of uplink and/or downlink UP TNL information may be provided for each PDU session.

In another optional manner, the user plane tunnel address information is on a bearer level. For example, the user plane tunnel address information is the uplink UP TNL information and/or the downlink UP TNL information, a terminal device communicates with a network device using a plurality of bearers, and a set of uplink and/or downlink UP TNL information may be provided for each bearer.

### 5. Data corresponding to a terminal device

A network device serving a terminal device configures a plurality of network devices for the terminal device, and the terminal device may perform an initial handover and a subsequent handover between the plurality of network devices. A source network device for each handover of the terminal device needs to forward data corresponding to the terminal device to a target network device for the current handover, to ensure service continuity.

For one handover of the terminal device, a source network device sends data corresponding to the terminal device to a target network device based on user plane tunnel address information of the target network device. The data corresponding to the terminal device includes downlink data that is not successfully transmitted by the source network device to the terminal device, and/or uplink data that is not delivered by the source network device to a core network. In this way, after the terminal device has been handed over to the target network device, the target network device can transmit, to the terminal device, downlink data that is not successfully transmitted by the source network device to the terminal device, and/or send, to the core network, uplink data that is not delivered by the source network device to the core network, to ensure the service continuity.

For example, data corresponding to the terminal device that is sent by a first network device to a second network device based on user plane tunnel address information of the second network device includes: downlink data that is not successfully transmitted by the first network device to the terminal device, and/or uplink data that is not delivered by the first network device to the core network. That the second network device can transmit the data corresponding to the terminal device after the terminal device has been handed over to the second network device includes: The second network device transmits, to the terminal device, the downlink data that is not successfully transmitted by the first network device to the terminal device, and/or sends, to the core network, the uplink data that is not delivered by the first network device to the core network.

For another example, data corresponding to the terminal device that is sent by the second network device to a third network device based on user plane tunnel address information of the third network device includes: downlink data that is not successfully transmitted by the second network device to the terminal device, and/or uplink data that is not delivered by the second network device to the core network.

### 6. Network device-triggered handover and terminal device-triggered handover

A mobility management procedure includes a network device-triggered handover procedure and a terminal device-triggered handover procedure.

In the network device-triggered handover procedure, when a candidate cell meets a handover trigger condition, a network device sends a handover command to a terminal device, to instruct the terminal device to perform handover to a target cell, where the target cell is the candidate cell that meets the handover trigger condition. After receiving the handover command, the terminal device performs handover to the target cell.

In the terminal device-triggered handover procedure, a network device configures a handover trigger condition for a terminal device, and when a candidate cell meets the handover trigger condition, the terminal device performs handover to the candidate cell. In the terminal device-triggered handover procedure, the terminal device does not need to receive a handover command sent by the network device. For example, the handover trigger condition configured by the network device for the terminal device is that signal quality of a candidate cell is higher than signal quality of a current serving cell by X. The current serving cell of the terminal device is a cell #1. After measurement, the terminal device determines that signal quality of a cell #2 is higher than signal quality of the cell #1 by X, that is, the cell #2 meets the handover trigger condition, and the terminal device performs handover to the cell #2.

The following uses a network device #1, a network device #2, and a network device #3 as an example for description. The network device #1 manages a cell #1, the network device #2 manages a cell #2, the network device #3 manages a cell #3, and a current serving cell of a terminal device is the cell #1.

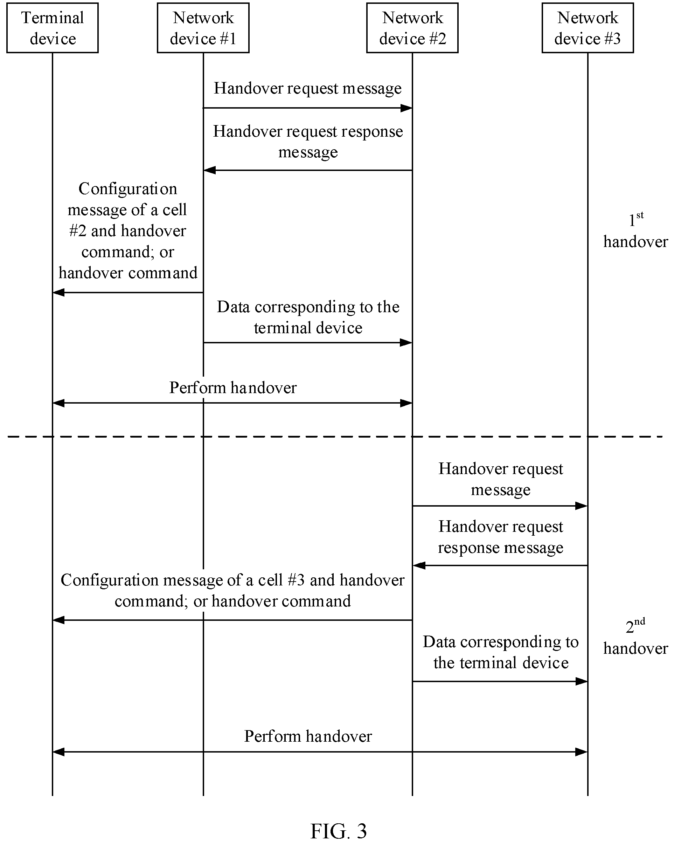

For example, for a network device-triggered handover procedure, with reference to FIG. 3, when determining that a target cell for a 1^{st} handover of a terminal device is the cell #2, the network device #1 sends a handover request message to the network device #2, where the handover request message is for requesting configuration information of the cell #2. The network device #2 sends a handover request response message to the network device #1, where the handover request response message includes the configuration information of the cell #2 and user plane tunnel address information of the cell #2. The network device #1 sends the configuration information of the cell #2 and a handover command to the terminal device, where the handover command instructs the terminal device to perform handover to the cell #2; or the network device #1 sends a handover command to the terminal device, where the handover command carries the configuration information of the cell #2, and the handover command instructs the terminal device to perform handover to the cell #2. After sending the handover command to the terminal device, the network device #1 sends data corresponding to the terminal device to the network device #2 based on the user plane tunnel address information of the cell #2. After receiving the handover command, the terminal device performs handover to the cell #2 based on the configuration information of the cell #2. If the terminal device still needs to perform handover subsequently, for example, a 2^{nd} handover performed by the terminal device is a handover from the network device #2 to the network device #3, the entire procedure of the 1^{st} handover needs to be performed again similarly, as shown in a 2^{nd} handover procedure in FIG. 3.

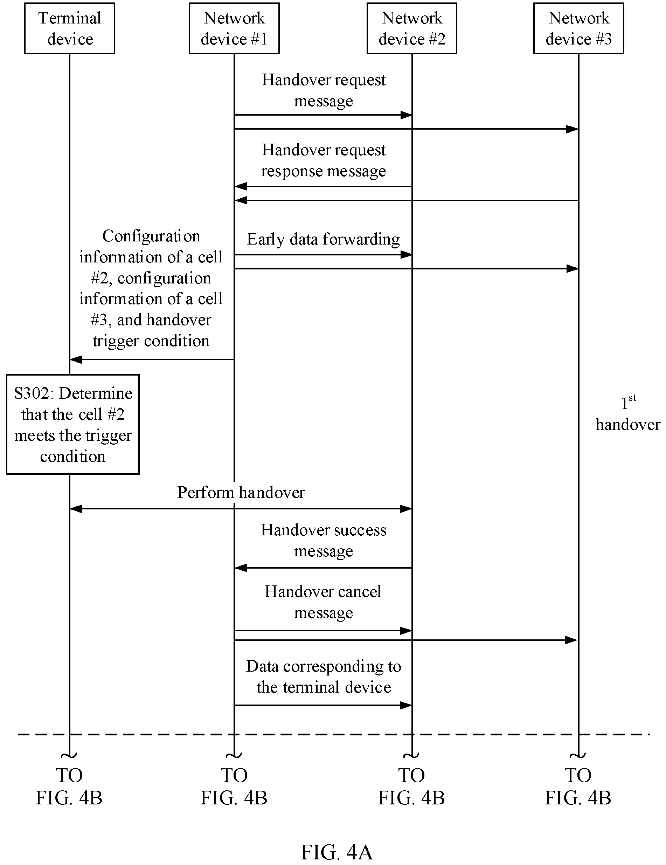

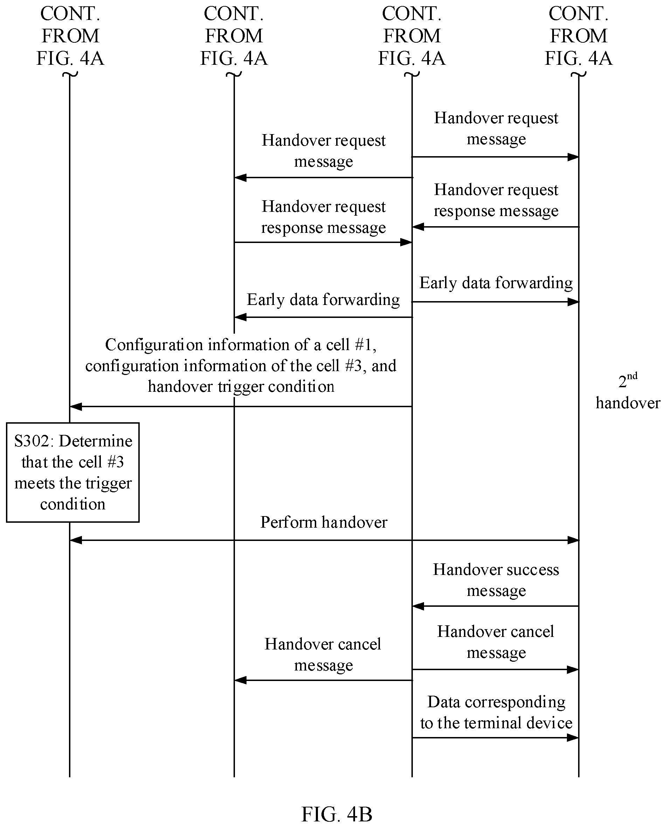

For another example, for a terminal device-triggered handover procedure, with reference to FIG. 4A and FIG. 4B, the network device #1 separately sends a handover request message to the network device #2 and the network device #3, where the handover request message is for requesting configuration information of a cell. The network device #2 sends a handover request response message to the network device #1, where the handover request response message includes configuration information of the cell #2 and user plane tunnel address information of the cell #2. The network device #3 sends a handover request response message to the network device #1, where the handover request response message includes configuration information of the cell #3 and user plane tunnel address information of the cell #3. The network device #1 sends the configuration information of the cell #2, the configuration information of the cell #3, and a handover trigger condition to a terminal device. The network device #1 performs early data forwarding. Specifically, the network device #1 sends data corresponding to the terminal device to the network device #2 based on the user plane tunnel address information of the cell #2, and/or sends the data corresponding to the terminal device to the network device #3 based on the user plane tunnel address information of the cell #3. When determining that the cell #2 meets the handover trigger condition, the terminal device performs handover to the cell #2 based on the configuration information of the cell #2, and releases the configuration information of the cell #2 and the configuration information of the cell #3 after the handover succeeds. After the terminal device accesses the network device #2, the network device #2 sends a handover success message to the network device #1. After receiving the handover success message sent by the network device #2, the network device #1 sends the data corresponding to the terminal device to the network device #2 based on the user plane tunnel address information of the cell #2. The network device #1 separately sends a handover cancel message to the network device #2 and the network device #3, where the handover cancel message indicates that the configuration information of the cell no longer needs to be provided. If the terminal device still needs to perform handover subsequently, for example, a 2^{nd} handover performed by the terminal device is a handover from the network device #2 to the network device #3, the entire procedure of the 1^{st} handover needs to be performed again similarly, as shown in a 2^{nd} handover procedure in FIG. 4A and FIG. 4B.

It can be learned that, according to the procedure in FIG. 3 or FIG. 4A and FIG. 4B, if the terminal device still needs to perform handover subsequently, the procedure of the 1^{st} handover needs to be performed again similarly. Data forwarding between a source network device and a target network device supports only a single handover, and is not applicable to subsequent handover technologies.

The following describes embodiments of this application in detail with reference to the accompanying drawings. In embodiments of this application, a corresponding method is described by using an example in which a network device and a terminal device serve as execution bodies. However, an execution body of the method is not limited in this application. For example, a device in the method may alternatively be a chip, a chip system, or a processor that supports a device in implementing the corresponding method, or may be a logical module or software that can implement all or a part of functions of the device.

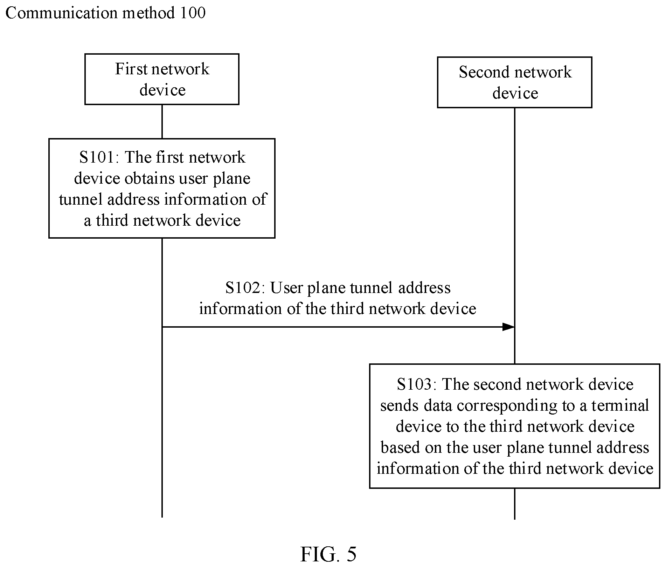

FIG. 5 is a schematic flowchart of a communication method 100 according to an embodiment of this application. The communication method 100 includes the following steps.

S101: A first network device obtains user plane tunnel address information of a third network device.

In an optional implementation, the user plane tunnel address information of the third network device includes user plane tunnel address information corresponding to each of one or more cells (cells) managed by the third network device, and the user plane tunnel address information corresponding to each cell is applicable to the cell. User plane tunnel address information corresponding to different cells in the one or more cells managed by the third network device may be different, or may be the same. For example, cells managed by the third network device are a cell #1, a cell #2, a cell #3, and a cell #4, the cell #1 corresponds to user plane tunnel address information #1, the cell #2 corresponds to user plane tunnel address information #2, the cell #3 corresponds to user plane tunnel address information #3, and the cell #4 corresponds to user plane tunnel address information #4.

In another optional implementation, the user plane tunnel address information of the third network device is applicable to all cells managed by the third network device. It may also be understood that all the cells managed by the third network device share same user plane tunnel address information. For example, cells managed by a second network device are a cell #1, a cell #2, a cell #3, and a cell #4, the user plane tunnel address information of the third network device is user plane tunnel address information #1, and the user plane tunnel address information #1 is applicable to the cell #1, the cell #2, the cell #3, and the cell #4.

In an optional implementation, the first network device and the third network device are a same network device. That the first network device obtains the user plane tunnel address information of the third network device includes: The first network device locally obtains the user plane tunnel address information of the third network device.

In another optional implementation, the first network device and the third network device are different network devices. That the first network device obtains the user plane tunnel address information of the third network device includes: The first network device receives the user plane tunnel address information of the third network device that is sent by the third network device. For example, the third network device sends a plurality of pieces of user plane tunnel address information to the first network device, and the plurality of pieces of user plane tunnel address information are in a one-to-one correspondence with a plurality of cells managed by the third network device. For another example, the third network device sends one piece of user plane tunnel address information to the first network device, where the piece of user plane tunnel address information is applicable to all cells managed by the third network device.

In an optional implementation, the method further includes: The first network device obtains configuration information of each of one or more cells managed by the third network device. The first network device receives configuration information of each of one or more cells managed by the second network device that is sent by the second network device. The first network device sends, to a terminal device, the configuration information of each of the one or more cells managed by the third network device and the configuration information of each of the one or more cells managed by the second network device.

In this embodiment of this application, configuration information of a cell includes configuration information to be used by the terminal device when accessing the cell. The configuration information includes, for example, at least one of the following: uplink physical channel configuration information, downlink physical channel configuration information, measurement configuration information, or bearer configuration information.

Optionally, the configuration information of each of the one or more cells managed by the third network device and the configuration information of each of the one or more cells managed by the second network device that are sent by the first network device to the terminal device may be, for example, carried in an RRC reconfiguration (RRC reconfiguration) message. In other words, the first network device may send the RRC reconfiguration message to the terminal device, where the RRC reconfiguration message includes the configuration information of each of the one or more cells managed by the third network device and the configuration information of each of the one or more cells managed by the second network device.

Optionally, when the first network device and the third network device are a same network device, that the first network device obtains the configuration information of each of the one or more cells managed by the third network device includes: The first network device locally obtains the configuration information of each of the one or more cells managed by the third network device.

Optionally, when the first network device and the third network device are different network devices, that the first network device obtains the user plane tunnel address information of the third network device includes: The first network device receives the configuration information of each of the one or more cells managed by the third network device that is sent by the third network device.

In an optional manner, the method further includes: The first network device sends a handover request (handover request) message to the second network device, where the handover request message is for requesting configuration information of a cell; and the configuration information of each of the one or more cells managed by the second network device that is sent by the second network device to the first network device is carried in a handover request response (handover request ack) message sent by the second network device.

Optionally, when the first network device and the third network device are different network devices, the method further includes: The first network device sends a handover request (handover request) message to the third network device, where the handover request message is for requesting configuration information of a cell; and the configuration information of each of the one or more cells managed by the third network device that is sent by the third network device to the first network device is carried in a handover request response (handover request ack) message sent by the third network device.

Optionally, the handover request response message is in a one-to-one correspondence with the cell. The second network device sends one or more handover request response messages to the first network device, where the one or more handover request response messages sent by the second network device are in a one-to-one correspondence with the one or more cells managed by the second network device, and each handover request response message includes configuration information of a cell corresponding to the handover request response message. For example, the cells managed by the second network device are a cell #1 and a cell #2, the second network device sends a handover request response message #1 and a handover request response message #2 to the first network device, the handover request response message #1 includes configuration information of the cell #1, and the handover request response message #2 includes configuration information of the cell #2. Similarly, when the first network device and the third network device are different network devices, the third network device sends one or more handover request response messages to the first network device, where the one or more handover request response messages sent by the third network device are in a one-to-one correspondence with the one or more cells managed by the third network device, and each handover request response message includes configuration information of a cell corresponding to the handover request response message.

For example, the cells managed by the second network device are a cell #1 and a cell #2, and the cells managed by the third network device are a cell #3 and a cell #4. The first network device sends a handover request message #1 to the second network device and sends a handover request message #2 to the third network device. The handover request message #1 is for requesting the second network device to provide configuration information of a cell, and the handover request message #2 is for requesting the third network device to provide configuration information of a cell. The second network device sends a handover request response message #1 and a handover request response message #2 to the first network device, the handover request response message #1 includes configuration information of the cell #1, and the handover request response message #2 includes configuration information of the cell #2. The third network device sends a handover request response message #3 and a handover request response message #4 to the first network device, the handover request response message #3 includes configuration information of the cell #3, and the handover request response message #4 includes configuration information of the cell #4. The first network device sends the configuration information of the cell #1, the configuration information of the cell #2, the configuration information of the cell #3, and the configuration information of the cell #4 to the terminal device.

Optionally, the handover request message sent by the first network device further indicates that the requested configuration information of the cell is for an LTM handover. For example, the first network device is a network device that initially initiates LTM, the first network device may also be referred to as an initial source network device, and a first cell managed by the first network device may also be referred to as an initial source cell. In addition, in addition to the LTM technology, another mobility technology, for example, a conditional handover (conditional handover, CHO) technology, may also be used in embodiments of this application. This is not limited.

In an optional manner, when the first network device and the third network device are different network devices, the user plane tunnel address information of the third network device that is sent by the third network device to the first network device is carried in the handover request response message sent by the third network device to the first network device. This manner may be applied to the following scenario: The user plane tunnel address information of the third network device includes the user plane tunnel address information corresponding to each of the one or more cells managed by the third network device, and the handover request response message is in a one-to-one correspondence with the cell. It may be understood that the third network device sends one or more handover request response messages to the first network device, where the one or more handover request response messages correspond to one or more cells managed by the third network device, and each handover request response message includes configuration information of a cell corresponding to the handover request response message and user plane tunnel address information corresponding to the cell corresponding to the handover request response message.

For example, the cells managed by the third network device are a cell #1 and a cell #2. The first network device sends a handover request message to the third network device, where the handover request message is for requesting the third network device to provide configuration information of a cell. The third network device sends a handover request response message #1 and a handover request response message #2 to the first network device, where the handover request response message #1 includes configuration information of the cell #1 and user plane tunnel address information corresponding to the cell #1, and the handover request response message #2 includes configuration information of the cell #2 and user plane tunnel address information corresponding to the cell #2.

In another optional manner, when the first network device and the third network device are different network devices, the user plane tunnel address information sent by the third network device to the first network device is carried in a notification message sent by the third network device to the first network device. The notification message is for notifying the first network device of the user plane tunnel address information of the third network device. That the third network device sends the notification message to the first network device may be performed by the third network device when the third network device has received the handover request message from the first network device.

This manner may be applied to the following scenario: The user plane tunnel address information of the third network device is applicable to all cells managed by the third network device. In this case, the notification message is further for notifying the first network device that the user plane tunnel address information of the third network device is applicable to all the cells managed by the third network device. For example, the cells managed by the third network device are a cell #1 and a cell #2. The third network device sends a notification message to the first network device, where the notification message includes user plane tunnel address information #1, and the user plane tunnel address information #1 is applicable to the cell #1 and the cell #2.

This manner may be further applied to the following scenario: The user plane tunnel address information of the third network device includes the user plane tunnel address information of each of the one or more cells managed by the third network device. For example, the cells managed by the third network device are a cell #1 and a cell #2. The third network device sends a notification message to the first network device, where the notification message includes user plane tunnel address information corresponding to the cell #1 and user plane tunnel address information corresponding to the cell #2.

Optionally, after the third network device has received a handover request message from the first network device, when the third network device sends a notification message to the first network device, the configuration information of each of the one or more cells managed by the third network device is carried in the notification message. For example, the cells managed by the third network device are a cell #1 and a cell #2. The first network device sends a handover request message to the third network device, where the handover request message is for requesting configuration information of a cell. The third network device sends a notification message to the first network device. The notification message includes user plane tunnel address information #1, configuration information of the cell #1, and configuration information of the cell #2, and the user plane tunnel address information #1 is applicable to the cell #1 and the cell #2. Alternatively, the notification message includes user plane tunnel address information corresponding to the cell #1, configuration information of the cell #1, user plane tunnel address information corresponding to the cell #2, and configuration information of the cell #2.

Optionally, after the third network device has received a handover request message from the first network device, when the third network device sends a notification message to the first network device, the configuration information of each of the one or more cells managed by the third network device is carried in a handover request response message. For example, the cells managed by the third network device are a cell #1 and a cell #2. The first network device sends a handover request message to the third network device, where the handover request message is for requesting configuration information of a cell. The third network device sends a notification message, a handover request response message #1, and a handover request response message #2 to the first network device, the handover request response message #1 includes configuration information of the cell #1, and the handover request response message #2 includes configuration information of the cell #2. The notification message includes user plane tunnel address information #1, and the user plane tunnel address information #1 is applicable to the cell #1 and the cell #2; or the notification message includes user plane tunnel address information corresponding to the cell #1 and user plane tunnel address information corresponding to the cell #2.

S102: The first network device sends the user plane tunnel address information of the third network device to the second network device. Correspondingly, the second network device receives the user plane tunnel address information of the third network device from the first network device.

The user plane tunnel address information of the third network device is for data forwarding during a 2^{nd} handover or a subsequent handover of the terminal device. In this embodiment of this application, the data forwarding during the 2^{nd} handover of the terminal device may be data forwarding when the terminal device is about to be handed over from the second network device to the third network device, that is, early data forwarding or data forwarding in advance; or may be data forwarding when the terminal device has been handed over from the second network device to the third network device. In addition, the data forwarding during the subsequent handover of the terminal device, for example, data forwarding during a 3^{rd} handover of the terminal device, is similar to data forwarding during the 2^{nd} handover of the terminal device. Details are not described below.

In an optional implementation, the user plane tunnel address information of the third network device that is sent by the first network device to the second network device is carried in first information. The first information further includes identifier information of the third network device or identifier information of each of the one or more cells managed by the third network device. In other words, the first network device sends the first information to the second network device, where the first information includes the user plane tunnel address information of the third network device, and the identifier information of the third network device or the identifier information of each of the one or more cells managed by the third network device. For the user plane tunnel address information of the third network device, refer to the related descriptions. Details are not described herein again.

For example, when the user plane tunnel address information of the third network device includes the user plane tunnel address information corresponding to each of the one or more cells managed by the third network device, the first information sent by the first network device to the second network device includes the user plane tunnel address information corresponding to each of the one or more cells managed by the third network device, and the identifier information of each of the one or more cells managed by the third network device.

For example, when the user plane tunnel address information of the third network device is applicable to all cells managed by the third network device, the first information sent by the first network device to the second network device includes the user plane tunnel address information of the third network device and the identifier information of each of the one or more cells managed by the third network device; or the first information includes the user plane tunnel address information of the third network device and the identifier information of the third network device.

In this embodiment of this application, the identifier information of the cell may be, for example, one of the following: a cell global identifier (cell global identifier, CGI), a physical cell identifier (physical cell ID, PCI), or a configured cell identifier (identifier, ID).

In an optional implementation, when the first network device and the third network device are different network devices, in addition to sending the user plane tunnel address information of the third network device to the second network device, the first network device further sends user plane tunnel address information of the first network device to the second network device. The method may be applied to a scenario in which the first network device is used as a candidate network device for handover of the terminal device. This implementation facilitates subsequent data forwarding when the terminal device is about to be handed over to the first network device, or facilitates subsequent data forwarding when the terminal device has been handed over to the first network device.

Optionally, the user plane tunnel address information of the first network device that is sent by the first network device to the second network device may be carried in first information, where the first information further includes identifier information of the first network device or identifier information of each of one or more cells managed by the first network device. For specific descriptions of the first information, refer to the related descriptions. Details are not described again.

For example, when the first network device and the third network device are different network devices, the first network device sends the first information to the second network device, where the first information includes the user plane tunnel address information of the third network device, the user plane tunnel address information of the first network device, the identifier information of the third network device or the identifier information of each of the one or more cells managed by the third network device, and the identifier information of the first network device or the identifier information of each of the one or more cells managed by the first network device.

In an optional manner, the user plane tunnel address information of the first network device includes user plane tunnel address information corresponding to each of the one or more cells managed by the first network device. In another optional manner, the user plane tunnel address information of the first network device is applicable to all cells managed by the first network device. In addition, the user plane tunnel address information of the first network device is similar to the user plane tunnel address information of the third network device. For details, refer to the related descriptions. Details are not described again.

In an optional implementation, when the first network device and the third network device are different network devices, in addition to sending the user plane tunnel address information of the third network device to the second network device, the first network device further receives user plane tunnel address information of the second network device that is sent by the second network device, and sends the user plane tunnel address information of the second network device to the third network device.

Optionally, the user plane tunnel address information of the second network device is for data forwarding when the terminal device is about to be handed over from the third network device to the second network device, or is for data forwarding when the terminal device has been handed over from the third network device to the second network device. For example, a target network device for the 3^{rd} handover of the terminal device is the second network device, and the user plane tunnel address information of the second network device is for data forwarding during the 3^{rd} handover of the terminal device.

In an optional manner, the user plane tunnel address information of the second network device includes user plane tunnel address information corresponding to each of the one or more cells managed by the second network device. In another optional manner, the user plane tunnel address information of the second network device is applicable to all cells managed by the second network device. In addition, the user plane tunnel address information of the second network device is similar to the user plane tunnel address information of the third network device. For details, refer to the related descriptions. Details are not described again.

In an optional manner, the user plane tunnel address information of the second network device that is sent by the second network device to the first network device may be carried in a handover request response message sent by the second network device to the first network device. This manner may be applied to the following scenario: The user plane tunnel address information of the second network device includes the user plane tunnel address information corresponding to each of the one or more cells managed by the second network device, and the handover request response message is in a one-to-one correspondence with the cell. It may be understood that, after receiving a handover request message from the first network device, the second network device sends one or more handover request response messages to the first network device. The one or more handover request response messages are in a one-to-one correspondence with the one or more cells managed by the second network device, and each handover request response message includes configuration information of a cell corresponding to the handover request response message, or user plane tunnel address information corresponding to the cell corresponding to the handover request response message. For specific descriptions of sending the handover request response message by the second network device to the first network device, refer to the related descriptions. Details are not described again.

In another optional manner, the user plane tunnel address information sent by the second network device to the first network device is carried in a notification message sent by the second network device to the first network device. This is similar to that the third network device sends the notification message to the first network device. Details are not described again.

Optionally, the user plane tunnel address information of the second network device that is sent by the first network device to the third network device is carried in ninth information, where the ninth information further includes identifier information of the second network device or identifier information of each of the one or more cells managed by the second network device. In other words, the first network device sends the ninth information to the third network device, where the ninth information includes the user plane tunnel address information of the second network device, and the identifier information of the second network device or the identifier information of each of the one or more cells managed by the second network device.

For example, the second network device sends user plane tunnel address information corresponding to a cell #2 to the first network device, and the third network device sends user plane tunnel address information corresponding to a cell #3 to the first network device. The first network device sends first information to the second network device, where the first information includes the user plane tunnel address information corresponding to the cell #3 and identifier information of the cell #3 or identifier information of the third network device. The first network device sends ninth information to the third network device, where the ninth information includes the user plane tunnel address information corresponding to the cell #2 and the identifier information of the cell #2 or the identifier information of the second network device.

Optionally, when the first network device and the third network device are different network devices, in addition to sending the user plane tunnel address information of the second network device to the third network device, the first network device further sends user plane tunnel address information of the first network device to the third network device. The method may be applied to a scenario in which the first network device is used as a candidate network device for handover of the terminal device. In addition, this manner is similar to that in which the first network device sends the user plane tunnel address information of the first network device to the second network device. For specific descriptions, refer to the related descriptions. For the user plane tunnel address information of the first network device, refer to the related descriptions. Details are not described again.

Optionally, the user plane tunnel address information of the first network device that is sent by the first network device to the third network device may be carried in the ninth information, where the ninth information further includes the identifier information of the first network device or the identifier information of each of the one or more cells managed by the first network device. For specific descriptions of the ninth information, refer to the related descriptions. Details are not described again.

For example, the first network device sends the ninth information to the third network device, where the ninth information includes the user plane tunnel address information of the second network device, the user plane tunnel address information of the first network device, the identifier information of the second network device or the identifier information of each of the one or more cells managed by the second network device, and the identifier information of the first network device or the identifier information of each of one or more cells managed by the first network device.

The following describes the 1^{st} handover of the terminal device, as described in the following optional Implementations 1.1 to 1.4.

Implementation 1.1: The method further includes: The first network device sends tenth information to the terminal device, where the tenth information indicates the terminal device to perform a handover to a second cell. The first network device sends data corresponding to the terminal device to the second network device based on the user plane tunnel address information of the second network device. The first network device sends fourth information to the second network device, where the fourth information is for notifying the second network device that the terminal device is about to be handed over from the first network device to the second network device. After receiving the tenth information, the terminal device performs handover to the second cell based on configuration information of the second cell.

The tenth information may be, for example, a handover command sent by the first network device to the terminal device when the first network device intends to instruct the terminal device to perform handover to the second cell, where the handover command instructs the terminal device to perform handover to the second cell.

Optionally, the fourth information includes identifier information of the second cell. In addition, the fourth information may be, for example, a handover notification message. In a scenario in which the LTM technology is used to perform handover, the fourth information may be, for example, an LTM notification (LTM notification) message.

In an optional manner, the operations in the implementation 1.1 are performed after Step S102. In another optional manner, the user plane tunnel address information of the third network device sent by the first network device to the second network device in Step S102 is carried in the fourth information sent by the first network device to the second network device in Implementation 1.1.

Implementation 1.2: The method further includes: When the second cell meets a handover trigger condition, the terminal device performs handover to the second cell based on the configuration information of the second cell. During a handover to the second cell or after a successful handover to the second cell, the terminal device sends identifier information of the first cell and/or the identifier information of the first network device to the second network device. The second network device sends second information to the first network device, where the second information indicates that the terminal device has been handed over from the first network device to the second network device. The first network device sends data corresponding to the terminal device to the second network device based on the user plane tunnel address information of the second network device.

It can be learned that, in Implementation 1.2, the terminal device sends, to the second network device, identifier information of a source cell (that is, the first cell) during the 1^{st} handover and/or identifier information of a source network device (that is, the first network device), so that the second network device determines, based on the identifier information of the first cell and/or the identifier information of the first network device, that the source network device for the 1^{st} handover is the first network device, and sends the second information to the first network device. In this way, the first network device may determine, through the second information, that a target network device for the 1^{st} handover is the second network device, to send the data corresponding to the terminal device to the second network device based on the user plane tunnel address information of the second network device. In this way, the second network device transmits the data corresponding to the terminal device when the terminal device has been handed over to the second network device, thereby ensuring service continuity.

The second information may be, for example, a handover success (handover success, HO success) message sent by the second network device to the first network device when the terminal device has been handed over from the first network device to the second network device. The handover success message indicates that the terminal device has been handed over from the first network device to the second network device.

Optionally, the handover trigger condition may be sent by the first network device to the terminal device. The handover trigger condition may be carried, for example, in an RRC reconfiguration message. For example, the handover trigger condition sent by the first network device to the terminal device includes a first value. When signal quality of the second cell is higher than signal quality of the first cell, and a difference between the signal quality of the second cell and the signal quality of the first cell is greater than the first value, the terminal device determines that the second cell meets the handover trigger condition. The first value may be predefined, or may be determined through negotiation. This is not limited.

In an optional manner, the operations in the implementation 1.2 are performed after Step S102. In another optional manner, Step S102 is performed after the operation in which the first network device receives the second information in Implementation 1.2.

Implementation 1.3: After Step S102, the method further includes: When the second cell meets a handover trigger condition, the terminal device performs handover to the second cell based on configuration information of the second cell. When the second network device has received the handover request message sent by the first network device, the second network device determines that a source network device for the 1^{st} handover of the terminal device is the first network device. The second network device sends second information to the first network device, where the second information indicates that the terminal device has been handed over from the first network device to the second network device. The first network device sends data corresponding to the terminal device to the second network device based on the user plane tunnel address information of the second network device.

In an optional manner, for a scenario in which the terminal device performs the 1^{st} handover, when the terminal device accesses the second network device, if the second network device has received the handover request message sent by the first network device, and the second network device has not received identifier information of the first cell and the identifier information of the first network device that are sent by the terminal device, the second network device determines that a source network device for the 1^{st} handover of the terminal device is the first network device. In other words, in a scenario of the 1^{st} handover of the terminal device, the terminal device does not need to send the identifier information of the first cell and/or the identifier information of the first network device to the second network device. In each subsequent handover (for example, the 2^{nd} handover or the 3^{rd} handover), the terminal device sends identifier information of a source cell and/or identifier information of a source network device to a target network device.

In another optional manner, for a scenario in which the terminal device performs the 1^{st} handover, when the terminal device accesses the second network device, if the second network device has received the handover request message sent by the first network device, and the second network device has not received a message indicating an identity of a serving network device of the terminal device, the second network device determines that a source network device for the 1^{st} handover of the terminal device is the first network device. In addition, the method further includes: The second network device sends third information to the third network device when the terminal device has been handed over from the first network device to the second network device, where the third information indicates that a network device currently serving the terminal device is the second network device. In this manner, when the terminal device is performing the 2^{nd} handover, the third network device can determine that a source network device for the 2^{nd} handover of the terminal device is the second network device, so that the third network device can send seventh information to the second network device, where the seventh information indicates that the terminal device has been handed over from the second network device to the third network device. In addition, this manner may be applied to a scenario in which the first network device sends the identifier information of the third network device to the second network device, so that the second network device can send the third information to the third network device based on the identifier information of the third network device.

Similarly, in each subsequent handover of the terminal device, a target network device notifies all candidate network devices of an identity of a current serving network device of the terminal device after the terminal device accesses the target network device. In this manner, the first network device needs to determine identities of all candidate network devices, and notify all the candidate network devices of the identities of all the candidate network devices, so that when a candidate network device becomes a target network device, the candidate network device can notify the other candidate network devices of an identity of a current serving network device of the terminal device. In this manner, the terminal device does not need to send identifier information of a source cell and/or identifier information of a source network device to a target network device for the 1^{st} handover and each subsequent handover.

Implementation 1.4: The method further includes: When the second cell meets a handover trigger condition, the terminal device determines that the terminal device is about to be handed over from the first network device to the second network device. The terminal device sends eighth information to the first network device, where the eighth information indicates that the terminal device is about to be handed over from the first network device to the second network device. The first network device sends fourth information to the second network device, where the fourth information is for notifying the second network device that the terminal device is about to be handed over from the first network device to the second network device. The first network device sends data corresponding to the terminal device to the second network device based on the user plane tunnel address information of the second network device. The terminal device performs handover to the second cell based on configuration information of the second cell. For specific descriptions of the fourth information, refer to the related descriptions in Implementation 1.1. Details are not described again.

Optionally, the eighth information includes identifier information of the second cell and/or identifier information of the second network device.

It can be learned that, in Implementation 1.4, when the terminal device is about to be handed over from the first network device to the second network device, the terminal device sends, to the first network device, identifier information of a target cell (that is, the second cell) for the 1^{st} handover of the terminal device and/or identifier information of a target network device (that is, the second network device) for the 1^{st} handover of the terminal device, so that the first network device determines that the target cell for the 1^{st} handover of the terminal device is the first cell and/or determines that the target network device for the 1^{st} handover of the terminal device is the second network device, and sends the data corresponding to the terminal device to the second network device based on the user plane tunnel address information of the second network device. In this way, the second network device transmits the data corresponding to the terminal device when the terminal device has been handed over to the second network device, thereby ensuring service continuity.

In an optional manner, the operations included in the implementation 1.4 are performed after Step S102. In another optional manner, the user plane tunnel address information of the third network device sent by the first network device to the second network device in Step S102 is carried in the fourth information sent by the first network device to the second network device in Implementation 1.4.

It can be learned that, for a scenario in which the terminal device triggers the 1^{st} handover, according to any one of Implementations 1.2 to 1.4, the second network device can determine that the source network device for the 1^{st} handover of the terminal device is the first network device. In other words, according to any one of Implementations 1.2 to 1.4, the target network device for the 1^{st} handover of the terminal device can determine an identity of the source network device for the 1^{st} handover, to facilitate smooth handover.

In an optional implementation, for any one of Implementations 1.2 to 1.4, the method further includes: When the first network device does not determine the target network device for the 1^{st} handover of the terminal device, the first network device sends the data corresponding to the terminal device to the second network device based on the user plane tunnel address information of the second network device, and/or sending the data corresponding to the terminal device to the third network device based on the user plane tunnel address information of the third network device.

Optionally, before determining the target network device for the 1^{st} handover of the terminal device, the first network device may determine, based on a measurement result reported by the terminal device, to send the data corresponding to the terminal device to the second network device and/or the third network device. The measurement result reported by the terminal device may include signal quality of a candidate cell measured by the terminal device. For example, when signal quality of a cell managed by the second network device is relatively good, the first network device sends the data corresponding to the terminal device to the second network device based on the user plane tunnel address information of the second network device.

It can be learned that, before the first network device determines that the target network device for the 1^{st} handover of the terminal device is the second network device, when the first network device does not know that the target network device for the 1^{st} handover of the terminal device is the second network device, the first network device forwards the data corresponding to the terminal device to the second network device and/or the third network device, so that the second network device can transmit data obtained in advance when the terminal device has been handed over to the second network device.

In an optional implementation, for any one of Implementations 1.1 to 1.4, when the user plane tunnel address information of the second network device includes the user plane tunnel address information corresponding to each of the one or more cells managed by the second network device, the first network device sends the data corresponding to the terminal device to the second network device based on the user plane tunnel address information of the second network device includes: The first network device sends the data corresponding to the terminal device to the second network device based on the user plane tunnel address information corresponding to the second cell.

S103: The second network device sends data corresponding to the terminal device to the third network device based on the user plane tunnel address information of the third network device.

It may be understood that Step S103 is performed when the terminal device has been handed over to the second network device. For the 2^{nd} handover of the terminal device, the second network device sends the data corresponding to the terminal device to the third network device based on the user plane tunnel address information of the third network device, so that the third network device transmits the data corresponding to the terminal device when the terminal device has been handed over from the second network device to the third network device, to ensure the service continuity.

In an optional implementation, when the user plane tunnel address information of the third network device includes the user plane tunnel address information corresponding to each of the one or more cells managed by the third network device, the second network device sends the data corresponding to the terminal device to the third network device based on the user plane tunnel address information of the third network device includes: The second network device sends the data corresponding to the terminal device to the third network device based on the user plane tunnel address information corresponding to a third cell.

In an optional implementation, before the second network device sends the data corresponding to the terminal device to the third network device based on the user plane tunnel address information of the third network device, the method further includes: The second network device determines that the terminal device is about to be handed over from the second network device to the third network device; or the second network device determines that the terminal device has been handed over from the second network device to the third network device.

It may be understood that, when the terminal device is about to be handed over from the second network device to the third network device, or when the terminal device has been handed over from the second network device to the third network device, the second network device sends the data corresponding to the terminal device to the third network device based on the user plane tunnel address information of the third network device.

Implementation 2.1: That the second network device determines that the terminal device is about to be handed over from the second network device to the third network device includes: When the second network device has sent fifth information to the terminal device, the second network device determines that the terminal device is about to be handed over from the second network device to the third network device. The fifth information indicates the terminal device to perform handover to the third cell.

The fifth information may be, for example, a handover command sent by the second network device to the terminal device when the second network device intends to instruct the terminal device to perform handover to the third cell, where the handover command instructs the terminal device to perform handover to the third cell.

In an optional manner, the second network device sends the fifth information to the terminal device, where the fifth information indicates the terminal device to perform handover to the third cell. The second network device sends the data corresponding to the terminal device to the third network device based on the user plane tunnel address information of the third network device. The second network device sends eleventh information to the third network device, where the eleventh information is for notifying the third network device that the terminal device is about to be handed over from the second network device to the third network device. After receiving the fifth information, the terminal device performs handover to the third cell based on configuration information of the third cell.

Optionally, the eleventh information includes identifier information of the third cell. In addition, the eleventh information may be, for example, a handover notification message. In a scenario in which the LTM technology is used to perform handover, the eleventh information may be, for example, an LTM notification (LTM notification) message.

Optionally, when the first network device and the third network device are different network devices, the eleventh information further includes the user plane tunnel address information of the second network device, or the eleventh information further includes the user plane tunnel address information of the second network device and the identifier information of the second network device or the identifier information of each of the one or more cells managed by the second network device. It can be learned that, in this manner, the second network device sends, in a 2^{nd} handover phase of the terminal device, the user plane tunnel address information of the second network device to a target network device (that is, the third network device) during the 2^{nd} handover. Similarly, the first network device sends, in the 1^{st} handover phase, the user plane tunnel address information of the second network device to the target network device (that is, the second network device) during the 1^{st} handover. The first network device does not need to send the user plane tunnel address information of the second network device to the third network device before the terminal device performs the 1^{st} handover, and does not need to send the user plane tunnel address information of the second network device to the third network device. It may be understood that a source network device for each handover sends user plane tunnel address information of a candidate network device to a target network device for the current handover.

Implementation 2.2: That the second network device determines that the terminal device is about to be handed over from the second network device to the third network device includes: When the second network device has received sixth information from the terminal device, the second network device determines that the terminal device is about to be handed over from the second network device to the third network device. The sixth information indicates that the terminal device is about to be handed over from the second network device to the third network device. Optionally, the sixth information includes identifier information of the third cell and/or the identifier information of the third network device.

In an optional manner, when the third cell meets the handover trigger condition, the terminal device determines that the terminal device is about to be handed over from the second network device to the third network device. The terminal device sends the sixth information to the second network device, where the sixth information indicates that the terminal device is about to be handed over from the second network device to the third network device. The second network device sends eleventh information to the third network device, where the eleventh information is for notifying the third network device that the terminal device is about to be handed over from the second network device to the third network device. The second network device sends the data corresponding to the terminal device to the second network device based on the user plane tunnel address information of the third network device. The terminal device performs handover to the third cell based on configuration information of the third cell. In addition, for specific descriptions of the eleventh information, refer to the related descriptions in Implementation 2.1. Details are not described again.

Optionally, when the first network device and the third network device are different network devices, the eleventh information further includes the user plane tunnel address information of the second network device, or the eleventh information further includes the user plane tunnel address information of the second network device and the identifier information of the second network device or the identifier information of each of the one or more cells managed by the second network device. For specific descriptions, refer to the related descriptions in Implementation 2.1. Details are not described again.

It can be learned that, in a scenario in which the terminal device triggers the 2^{nd} handover, the terminal device sends the sixth information to the second network device, and the second network device sends the eleventh information to the third network device based on the sixth information, so that the third network device can determine that the source network device for the 2^{nd} handover of the terminal device is the second network device. In other words, a target network device for the 2^{nd} handover of the terminal device can determine an identity of the source network device for the 2^{nd} handover, to facilitate smooth handover.

Implementation 2.3: That the second network device determines that the terminal device has been handed over from the second network device to the third network device includes: When the second network device has received seventh information from the third network device, the second network device determines that the terminal device has been handed over from the second network device to the third network device. The seventh information indicates that the terminal device has been handed over from the second network device to the third network device.

The seventh information may be, for example, a handover success (HO success) message sent by the third network device to the second network device when the terminal device has been handed over from the second network device to the third network device. The handover success message indicates that the terminal device has been handed over from the second network device to the third network device.

In an optional manner, when the third cell meets the handover trigger condition, the terminal device performs handover to the third cell based on configuration information of the third cell. During a handover to the third cell or after a successful handover to the third cell, the terminal device sends the identifier information of the second cell and/or the identifier information of the second network device to the third network device. The third network device sends seventh information to the second network device, where the seventh information indicates that the terminal device has been handed over from the second network device to the third network device. The second network device sends the data corresponding to the terminal device to the second network device based on the user plane tunnel address information of the third network device. In addition, for the trigger condition, refer to the related descriptions. Details are not described again. It can be learned that, in a scenario in which the terminal device triggers the 2^{nd} handover, the terminal device sends the identifier information of the second cell and/or the identifier information of the second network device to the third network device, so that the third network device can determine that the source network device for the 2^{nd} handover of the terminal device is the second network device. In other words, a target network device for the 2^{nd} handover of the terminal device can determine an identity of the source network device for the 2^{nd} handover, to facilitate smooth handover.

Optionally, when the first network device and the third network device are different network devices, after the second network device receives the seventh information sent by the third network device, the method further includes: The second network device sends the user plane tunnel address information of the second network device to the third network device. Alternatively, the method further includes: The second network device sends the user plane tunnel address information of the second network device and the identifier information of the second network device or the identifier information of each of the one or more cells managed by the second network device to the third network device. It can be learned that, in this manner, the second network device sends, in a 2^{nd} handover phase of the terminal device, the user plane tunnel address information of the second network device to a target network device (that is, the third network device) during the 2^{nd} handover. Similarly, the first network device sends, in the 1^{st} handover phase, the user plane tunnel address information of the second network device to the target network device (that is, the second network device) during the 1^{st} handover. The first network device does not need to send the user plane tunnel address information of the second network device to the third network device before the terminal device performs the 1^{st} handover, and does not need to send the user plane tunnel address information of the second network device to the third network device. It may be understood that a source network device for each handover sends user plane tunnel address information of a candidate network device to a target network device for the current handover.

In another optional manner, when the third cell meets the handover trigger condition, the terminal device performs handover to the third cell based on configuration information of the third cell. The third network device determines, based on the third information, that the source network device for the 2^{nd} handover of the terminal device is the second network device. The third information is sent by the second network device to the third network device when the terminal device has been handed over from the first network device to the second network device, and the third information indicates that a network device serving the terminal device when the terminal device has been handed over to the second network device is the second network device. The third network device sends the seventh information to the second network device, where the seventh information indicates that the terminal device has been handed over from the second network device to the third network device. The second network device sends the data corresponding to the terminal device to the second network device based on the user plane tunnel address information of the third network device. In addition, for the handover trigger condition, refer to the related descriptions. Details are not described again. It can be learned that, in a scenario in which the terminal device triggers the 2^{nd} handover, in this manner, the third network device can determine that the source network device for the 2^{nd} handover of the terminal device is the second network device. In other words, a target network device for the 2^{nd} handover of the terminal device can determine an identity of the source network device for the 2^{nd} handover, to facilitate smooth handover.

Optionally, the method further includes: The third network device sends twelfth information to the second network device when the terminal device has been handed over from the second network device to the third network device, where the twelfth information indicates that the network device currently serving the terminal device is the third network device. In this manner, the target network device for the 3^{rd} handover can determine that the source network device for the 3^{rd} handover is the third network device, so that the target network device for the 3^{rd} handover can send a handover success message to the third network device. Optionally, if the first network device is used as a candidate network device for handover of the terminal device, in addition to sending the twelfth information to the second network device, the third network device further sends the twelfth information to the first network device.

In an optional implementation, for any one of Implementation 2.2 and Implementation 2.3, the method further includes: When the terminal device has been handed over to the second network device, the second network device sends the data corresponding to the terminal device to the third network device based on the user plane tunnel address information of the third network device. It may be understood that, before the terminal device has been handed over from the second network device to the third network device, the second network device forwards the data corresponding to the terminal device to the third network device, so that the third network device can transmit the data obtained in advance when the terminal device has been handed over to the third network device.

In an optional implementation, the method further includes: The first network device obtains user plane tunnel source address information of the third network device, and the first network device sends the user plane tunnel source address information of the third network device to the second network device. In this method, in a scenario in which the second network device is used as a target network device for an i^{th} (where i is a positive integer) handover of the terminal device, and the third network device is used as a source network device for the i^{th} handover of the terminal device, the second network device determines, based on the user plane tunnel source address information of the third network device, to receive data corresponding to the terminal device that is sent by the third network device to the second network device. It may be understood that the second network device determines that the user plane tunnel source address information of the third network device is valid, to receive the data corresponding to the terminal device that is sent by the third network device to the second network device. This helps ensure communication security and avoid link congestion caused by unauthorized data forwarding by an unauthorized device.

In this embodiment of this application, the user plane tunnel source address information of the network device is similar to the user plane tunnel address information of the network device. A difference between the user plane tunnel source address information of the network device and the user plane tunnel address information of the network device lies in that the user plane tunnel source address information of the network device is used when the network device is used as a source network device, and the user plane tunnel address information of the network device is used when the network device is used as a target network device. For example, the source network device for the i^{th} handover of the terminal device is the third network device, the target network device for the i^{th} handover of the terminal device is the second network device, a source address used by the third network device to send the data corresponding to the terminal device to the second network device is the user plane tunnel source address information of the third network device, and a destination address used is the user plane tunnel address information of the second network device. In addition, the user plane tunnel address information may also be referred to as user plane tunnel destination address information.

In addition, that the first network device obtains the user plane tunnel source address information of the third network device is similar to that the first network device obtains the user plane tunnel address information of the third network device. For specific descriptions, refer to the related descriptions. Details are not described again. That the first network device sends the user plane tunnel source address information of the third network device to the second network device is similar to that the first network device sends the user plane tunnel address information of the third network device to the second network device. For specific descriptions, refer to the related descriptions. Details are not described again.

Optionally, when the first network device and the third network device are different network devices, the method further includes: The first network device sends user plane tunnel source address information of the second network device to the third network device. In this method, in a scenario in which the third network device is used as a target network device for a j^{th} (where j is a positive integer) handover of the terminal device, and the second network device is used as a source network device for the j^{th} handover of the terminal device, the third network device determines, based on the user plane tunnel source address information of the second network device, to receive data corresponding to the terminal device that is sent by the second network device to the third network device. It may be understood that the third network device determines that the user plane tunnel source address information of the second network device is valid, to receive the data corresponding to the terminal device that is sent by the second network device to the third network device. This helps ensure communication security and avoid link congestion caused by unauthorized data forwarding by an unauthorized device.

In an optional implementation, for a case in which a communication system further includes another network device different from the first network device, the second network device, and the third network device, the following uses an example in which the communication system further includes a fourth network device, and the fourth network device also is used as a candidate network device for the 1^{st} handover of the terminal device for description.

When sending the user plane tunnel address information of the third network device to the second network device, the first network device further sends user plane tunnel address information of the fourth network device to the second network device. The user plane tunnel address information of the fourth network device is for data forwarding when the terminal device is about to be handed over to the fourth network device, or for data forwarding when the terminal device has been handed over to the fourth network device.

Optionally, in a scenario in which the first network device and the third network device are different network devices, and the first network device further sends the user plane tunnel address information of the second network device to the third network device, when sending the user plane tunnel address information of the second network device to the third network device, the first network device further sends the user plane tunnel address information of the fourth network device to the third network device.

Optionally, in a scenario in which the first network device and the third network device are different network devices, and the second network device further sends the user plane tunnel address information of the second network device to the third network device, when sending the user plane tunnel address information of the second network device to the third network device, the second network device further sends the user plane tunnel address information of the fourth network device to the third network device.

It may be understood that, in an optional manner, the first network device obtains respective user plane tunnel address information of at least one network device. The first network device sends the respective user plane tunnel address information of the at least one network device to each of the at least one network device. Optionally, the method further includes: The first network device obtains respective user plane tunnel source address information of the at least one network device, and the first network device sends the respective user plane tunnel source address information of the at least one network device to each of the at least one network device. In other words, in the method, the first network device sends the respective user plane tunnel address information and user plane tunnel source address information of the at least one network device to each of the at least one network device.

For example, the first network device is a network device #1, and the first network device obtains user plane tunnel address information #2 and user plane tunnel source address information #2 of a network device #2, user plane tunnel address information #3 and user plane tunnel source address information #3 of a network device #3, and user plane tunnel address information #4 and user plane tunnel source address information #4 of a network device #4. The network device #1 sends the user plane tunnel address information #3, the user plane tunnel source address information #3, the user plane tunnel address information #4, and the user plane tunnel source address information #3 to the network device #2, sends the user plane tunnel address information #2, the user plane tunnel source address information #2, the user plane tunnel address information #4, and the user plane tunnel source address information #4 to the network device #3, and sends the user plane tunnel address information #2, the user plane tunnel source address information #2, the user plane tunnel address information #3, and the user plane tunnel source address information #3 to the network device #4.

In another optional manner, the first network device obtains respective user plane tunnel address information of at least one network device (including the second network device). When determining that the target network device for the 1^{st} handover of the terminal device is the second network device, the first network device sends the respective user plane tunnel address information of the at least one network device to the second network device. If the at least one network device further includes the third network device different from the first network device, when determining that the target network device for the 2^{nd} handover of the terminal device is the third network device, the second network device sends the respective user plane tunnel address information of the at least one network device to the third network device. In other words, a source network device for each handover of the terminal device sends the respective user plane tunnel address information of the at least one network device to a target network device of the current handover. Optionally, the method further includes: The first network device obtains respective user plane tunnel source address information of the at least one network device. When determining that the target network device for the 1^{st} handover of the terminal device is the second network device, the first network device further sends the respective user plane tunnel source address information of the at least one network device to the second network device. If the at least one network device further includes the third network device different from the first network device, when determining that the target network device for the 2^{nd} handover of the terminal device is the third network device, the second network device further sends the respective user plane tunnel source address information of the at least one network device to the third network device. In other words, in this method, a source network device for each handover of the terminal device sends the respective user plane tunnel address information and user plane tunnel source address information of the at least one network device to a target network device of the current handover.

For example, the first network device is a network device #1, and the first network device obtains user plane tunnel address information #2 and user plane tunnel source address information #2 of a network device #2, user plane tunnel address information #3 and user plane tunnel source address information #3 of a network device #3, and user plane tunnel address information #4 and user plane tunnel source address information #4 of a network device #4. When determining that the target network device for the 1^{st} handover of the terminal device is the network device #2, the network device #1 sends the user plane tunnel address information #3, the user plane tunnel source address information #3, the user plane tunnel address information #4, and the user plane tunnel source address information #4 to the network device #2. When determining that the target network device for the 2^{nd} handover of the terminal device is the network device #3, the network device #2 sends the user plane tunnel address information #2, the user plane tunnel source address information #2, the user plane tunnel address information #4, and the user plane tunnel source address information #4 to the network device #3.

In conclusion, in the communication method 100, the first network device sends the user plane tunnel address information of the third network device to the second network device. The second network device sends the data corresponding to the terminal device to the third network device based on the user plane tunnel address information of the third network device. The first network device is the source network device for the 1^{st} handover of the terminal device, the second network device is the target network device for the 1^{st} handover of the terminal device, and the third network device is the target network device for the 2^{nd} handover of the terminal device.

It can be learned that, in the method, the source network device (that is, the first network device) for the 1^{st} handover of the terminal device sends the user plane tunnel address information of the third network device to the second network device, so that for the 2^{nd} handover of the terminal device, the second network device can send the data corresponding to the terminal device to the third network device based on the user plane tunnel address information of the target network device (that is, the third network device) for the 2^{nd} handover of the terminal device, and the third network device can transmit the data corresponding to the terminal device when the terminal device successfully accesses the third network device, thereby ensuring service continuity.

In addition, an embodiment of this application further provides a communication method 200. In the communication method 200, for any handover of a terminal device, when the terminal device has been handed over to a target network device, the target network device sends a handover success message to a source network device, where the handover success message includes user plane tunnel address information of the target network device. After receiving the handover success message from the target network device, the source network device sends data corresponding to the terminal device to the target network device based on the user plane tunnel address information of the target network device, so that the target network device can transmit the data corresponding to the terminal device, thereby ensuring service continuity.

The following uses a 1^{st} handover and a 2^{nd} handover as an example for description.

In an optional manner, for the 1^{st} handover of the terminal device, when the terminal device has been handed over to a second network device, the second network device sends second information to a first network device, where the second information indicates that the terminal device has been handed over from the first network device to the second network device, and the second information includes user plane tunnel address information of the second network device. After receiving the second information from the second network device, the first network device sends data corresponding to the terminal device to the second network device based on the user plane tunnel address information of the second network device carried in the second information.

In another optional manner, for the 1^{st} handover of the terminal device, when the terminal device has been handed over to the second network device, the second information sent by the second network device to the first network device does not include the user plane tunnel address information of the second network device. This manner may be applied to a scenario in which the first network device has received the user plane tunnel address from the second network device before the terminal device performs the 1^{st} handover, so that after receiving the second information from the second network device, the first network device sends the data corresponding to the terminal device to the second network device based on the user plane tunnel address information of the second network device that is obtained in advance.

For example, the first network device sends a handover request message to the second network device to request configuration information of a cell, and the second network device sends, to the first network device, a handover request response message that includes the user plane tunnel address information of the second network device in addition to configuration information of each of one or more cells managed by the second network device. Then, after receiving the second information from the second network device, the first network device may send the data corresponding to the terminal device to the second network device based on the user plane tunnel address information of the second network device in the previously received handover request response message. For the handover request message and the handover request response message, refer to the related descriptions. Details are not described again.

In an optional implementation, for the 2^{nd} handover of the terminal device, when the terminal device has been handed over to the third network device, the third network device sends seventh information to the second network device. The seventh information indicates that the terminal device has been handed over from the second network device to the third network device, and the seventh information includes user plane tunnel address information of the third network device. After receiving the seventh information from the third network device, the second network device sends data corresponding to the terminal device to the third network device based on the user plane tunnel address information of the third network device carried in the seventh information.

The following describes the communication method provided in embodiments of this application, for example, communication methods described in the following Example 1 to Example 5, by using an example in which a first network device, a second network device, and a third network device are involved, and the first network device and the third network device are different network devices.

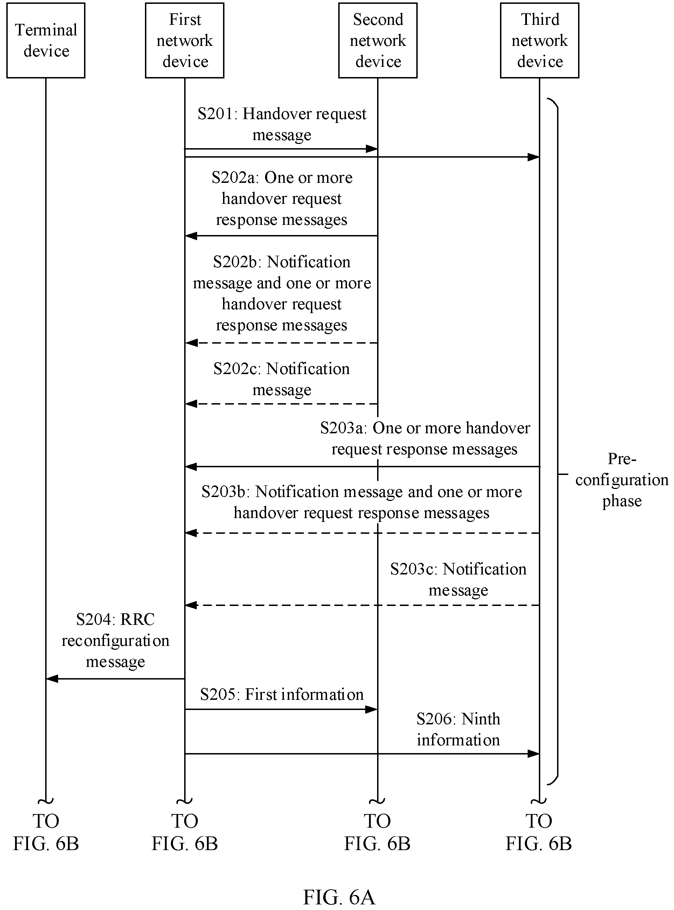

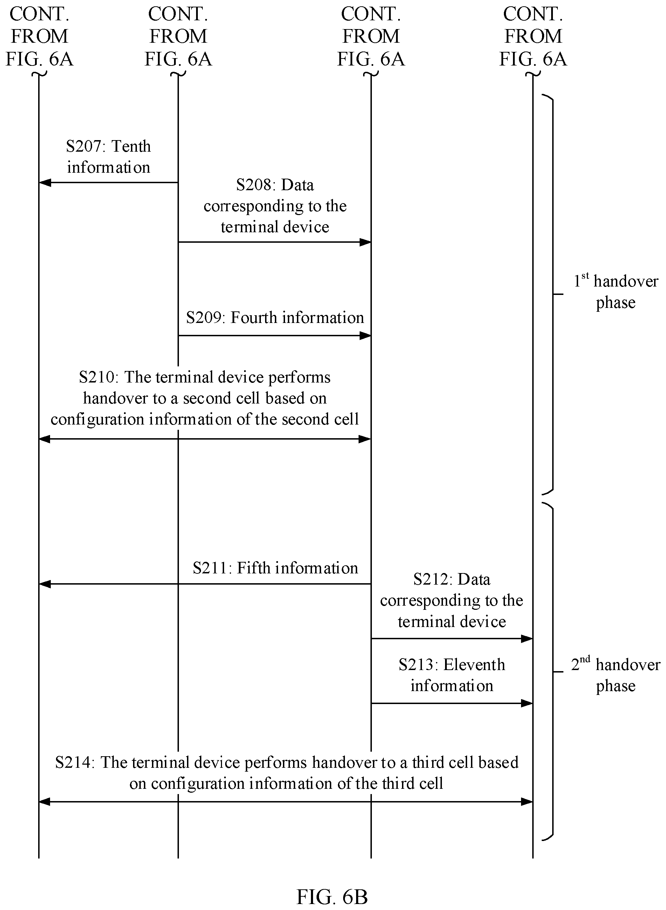

Example 1: With reference to FIG. 6A and FIG. 6B, the communication method described in Example 1 includes a pre-configuration phase, a 1^{st} handover phase, and a 2^{nd} handover phase. The pre-configuration phase includes Steps S201 to S206, the 1^{st} handover phase includes Steps S207 to S210, and the 2^{nd} handover phase includes Steps S211 to S214.

S201: A first network device sends a handover request message to a second network device and a third network device, where the handover request message is for requesting configuration information of a cell. Correspondingly, the second network device receives the handover request message from the first network device, and the third network device receives the handover request message from the first network device.

Optionally, the handover request message further indicates that the requested configuration information of the cell is for an LTM handover.

S202a: The second network device sends one or more handover request response messages to the first network device, where the one or more handover request messages correspond to one or more cells managed by the second network device, and each handover request response message includes configuration information of a cell corresponding to the handover request response message and user plane tunnel address information of the cell corresponding to the handover request response message. Correspondingly, the first network device receives the one or more handover request response messages from the second network device.

S202b: The second network device sends a notification message and one or more handover request response messages to the first network device, where the one or more handover request messages correspond to one or more cells managed by the second network device, each handover request response message includes configuration information of a cell corresponding to the handover request response message, and the notification message includes user plane tunnel address information of the second network device. Correspondingly, the first network device receives the notification message and the one or more handover request response messages from the second network device.

S202c: The second network device sends a notification message to the first network device, where the notification message includes user plane tunnel address information of the second network device and configuration information corresponding to each of one or more cells managed by the second network device. Correspondingly, the first network device receives the notification message from the second network device.

Only one of Step S202a, Step S202b, and Step S202c is performed. If Step S202a is performed, the user plane tunnel address information of the second network device mentioned in a subsequent step includes user plane tunnel address information corresponding to each of the one or more cells managed by the second network device. If Step S202b or Step S202c is performed, the user plane tunnel address information of the second network device includes: the user plane tunnel address information corresponding to each of the one or more cells managed by the second network device, or the user plane tunnel address information of the second network device is applicable to all the cells managed by the second network device. S203a: The third network device sends one or more handover request response messages to the first network device, where the one or more handover request messages correspond to one or more cells managed by the third network device, and each handover request response message includes configuration information of a cell corresponding to the handover request response message and user plane tunnel address information of the cell corresponding to the handover request response message. Correspondingly, the first network device receives the one or more handover request response messages from the third network device.

S203b: The third network device sends a notification message and one or more handover request response messages to the first network device, where the one or more handover request messages correspond to one or more cells managed by the third network device, each handover request response message includes configuration information of a cell corresponding to the handover request response message, and the notification message includes user plane tunnel address information of the third network device. Correspondingly, the first network device receives the notification message and the one or more handover request response messages from the third network device.

S203c: The third network device sends a notification message to the first network device, where the notification message includes user plane tunnel address information of the third network device and configuration information corresponding to each of one or more cells managed by the third network device. Correspondingly, the first network device receives the notification message from the third network device.

Only one of Step S203a, Step S203b, and Step S203c is performed. If Step S203a is performed, the user plane tunnel address information of the third network device mentioned in a subsequent step includes user plane tunnel address information corresponding to each of the one or more cells managed by the third network device. If Step S203b or Step S203c is performed, the user plane tunnel address information of the third network device includes: the user plane tunnel address information corresponding to each of the one or more cells managed by the third network device, or the user plane tunnel address information of the third network device is applicable to all the cells managed by the third network device.

S204: The first network device sends an RRC reconfiguration message to a terminal device, where the RRC reconfiguration message includes configuration information of each of the one or more cells managed by the second network device and configuration information of each of the one or more cells managed by the third network device. Correspondingly, the terminal device receives the RRC reconfiguration message from the first network device.

S205: The first network device sends first information to the second network device, where the first information includes the user plane tunnel address information of the third network device, and identifier information of the third network device or identifier information of each of the one or more cells managed by the third network device. Correspondingly, the second network device receives the first information from the first network device.

S206: The first network device sends ninth information to the third network device, where the ninth information includes the user plane tunnel address information of the second network device, and identifier information of the second network device or identifier information of each of the one or more cells managed by the second network device. Correspondingly, the third network device receives the ninth information from the first network device.

In an optional implementation, in a scenario in which the first network device is used as a candidate network device to which the terminal device performs handover from another network device, the first information and the ninth information may further include: user plane tunnel address information of the first network device, and identifier information of the first network device or identifier information of each of one or more cells managed by the first network device.

S207: The first network device sends tenth information to the terminal device, where the tenth information indicates the terminal device to perform handover to a second cell. Correspondingly, the terminal device receives the tenth information from the first network device.

S208: The first network device sends data corresponding to the terminal device to the second network device based on the user plane tunnel address information of the second network device. Correspondingly, the second network device receives the data corresponding to the terminal device from the first network device. It should be understood that S208 may be performed before S207, or may be performed after S207. This is not specifically limited in this embodiment.

S209: The first network device sends fourth information to the second network device, where the fourth information is for notifying the second network device that the terminal device is about to be handed over from the first network device to the second network device. Correspondingly, the second network device receives the fourth information from the first network device. Optionally, the fourth information includes identifier information of the second cell. It should be understood that S209 may be performed before S207, or may be performed after S207. This is not specifically limited in this embodiment.

S210: The terminal device performs handover to the second cell based on configuration information of the second cell.

S211: The second network device sends fifth information to the terminal device, where the fifth information indicates the terminal device to perform handover to a third cell. Correspondingly, the terminal device receives the fifth information from the first network device.

S212: The second network device sends data corresponding to the terminal device to the third network device based on the user plane tunnel address information of the third network device. Correspondingly, the third network device receives the data corresponding to the terminal device from the second network device. It should be understood that S212 may be performed before S211, or may be performed after S211. This is not specifically limited in this embodiment.

S213: The second network device sends eleventh information to the third network device, where the eleventh information is for notifying the third network device that the terminal device is about to be handed over from the second network device to the third network device. Correspondingly, the third network device receives the eleventh information from the second network device. Optionally, the eleventh information includes identifier information of the third cell. It should be understood that S213 may be performed before S211, or may be performed after S211. This is not specifically limited in this embodiment.

S214: The terminal device performs handover to the third cell based on configuration information of the third cell.

Optionally, the communication method described in Example 1 may further include subsequent handover phases such as a 3^{rd} handover phase and a 4^{th} handover phase. A procedure of any subsequent handover phase is similar to that of the 2^{nd} handover phase. Details are not described again.

For specific descriptions of the communication method described in Example 1, refer to related descriptions of the communication method 100. Details are not described again.

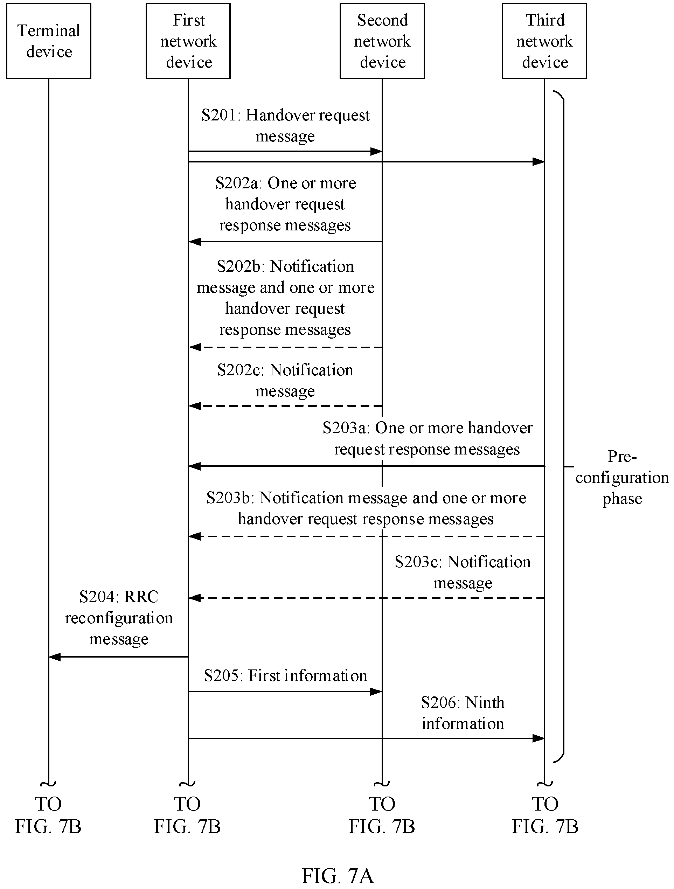

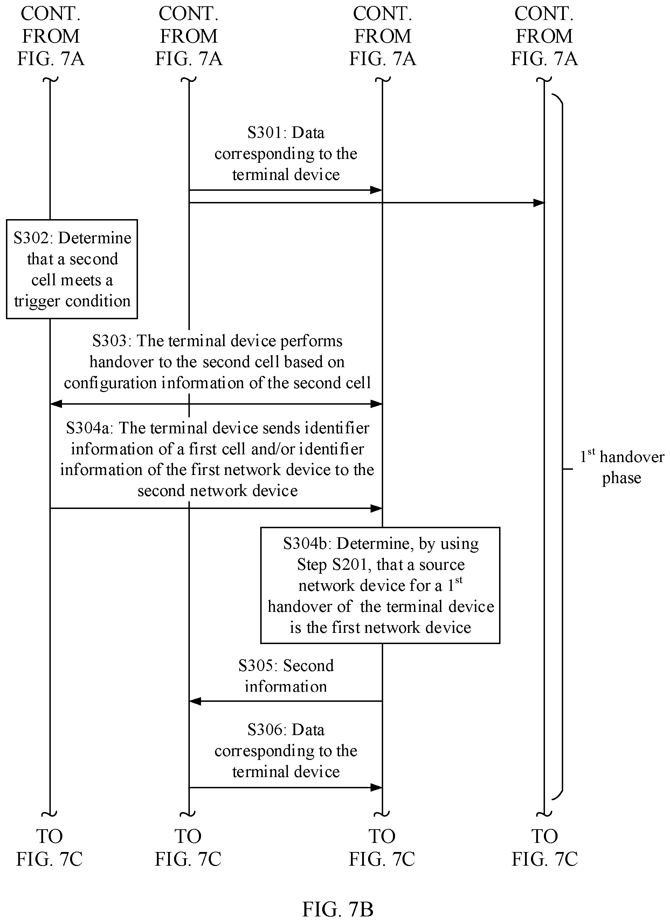

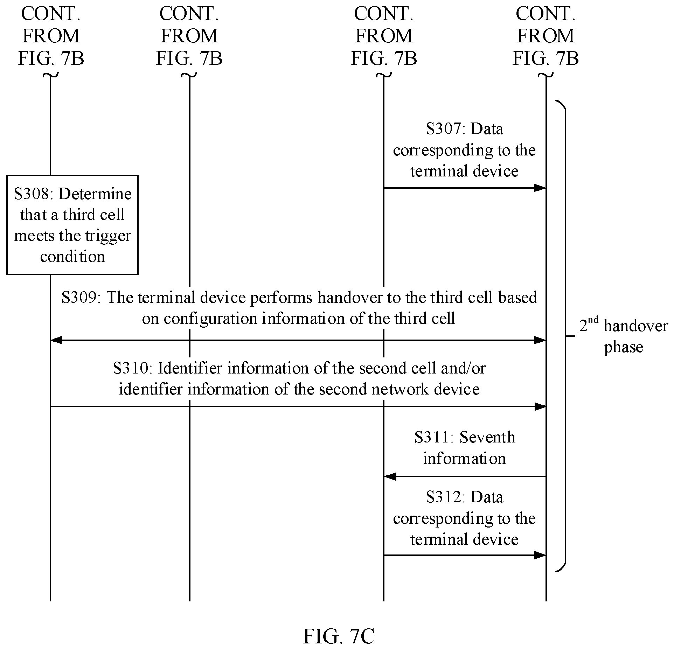

Example 2: With reference to FIG. 7A to FIG. 7C, the communication method described in Example 2 includes a pre-configuration phase, a 1^{st} handover phase, and a 2^{nd} handover phase. The pre-configuration phase includes Steps S201 to S206. The 1^{st} handover phase includes Steps S301 to S303, S304a, S305, and S306, or the 1^{st} handover phase includes Steps S301 to S303, S304b, S305, and S306. The 2^{nd} handover phase includes Steps S307 to S312.

For specific descriptions of Steps S201 to S206, refer to related descriptions in Example 1. Details are not described again. In addition, there is a difference between Step S204 in Example 2 and Step S204 in Example 1. The difference lies in that: In Step S204 in Example 2, an RRC reconfiguration message sent by a first network device to a terminal device further includes a trigger condition in addition to configuration information of each of one or more cells managed by a second network device and configuration information of each of one or more cells managed by a third network device.

S301: The first network device sends data corresponding to the terminal device to the second network device based on user plane tunnel address information of the second network device, and sends the data corresponding to the terminal device to the third network device based on user plane tunnel address information of the third network device. Correspondingly, the second network device receives the data corresponding to the terminal device from the first network device, and the third network device receives the data corresponding to the terminal device from the first network device. It should be understood that S301 is an early data forwarding process, and is an optional step.

Optionally, in Step S301, the data corresponding to the terminal device that is sent by the first network device is received downlink data from a core network.

S302: The terminal device determines that a second cell meets the trigger condition.

S303: The terminal device performs handover to the second cell based on configuration information of the second cell.

S304a: The terminal device sends identifier information of a first cell and/or identifier information of the first network device to the second network device. Correspondingly, the second network device receives the identifier information of the first cell and/or the identifier information of the first network device from the terminal device.

S304b: The second network device determines, by using Step S201, that a source network device for a 1^{st} handover of the terminal device is the first network device.

In S304b included in Example 2, when the terminal device has accessed the second network device, the second network device determines, based on a case in which a handover request message sent by the first network device has been received and the identifier information of the first cell and the identifier information of the first network device that are sent by the terminal device have not been received, that a source network device for the 1^{st} handover of the terminal device is the first network device.

S305: The second network device sends second information to the first network device, where the second information indicates that the terminal device has been handed over from the first network device to the second network device. Correspondingly, the first network device receives the second information from the second network device.

S306: The first network device sends the data corresponding to the terminal device to the second network device based on the user plane tunnel address information of the second network device. Correspondingly, the second network device receives the data corresponding to the terminal device from the first network device.

S307: When the terminal device has been handed over to the second network device, the second network device sends data corresponding to the terminal device to the third network device based on the user plane tunnel address information of the third network device. Correspondingly, the third network device receives the data corresponding to the terminal device from the second network device. It should be understood that S307 is an early data forwarding process, and is an optional step.

S308: The terminal device determines that a third cell meets the trigger condition.

S309: The terminal device performs handover to the third cell based on configuration information of the third cell.

S310: The terminal device sends identifier information of the second cell and/or identifier information of the second network device to the third network device. Correspondingly, the third network device receives the identifier information of the second cell and/or the identifier information of the second network device from the terminal device.

S311: The third network device sends seventh information to the second network device, where the seventh information indicates that the terminal device has been handed over from the second network device to the third network device. Correspondingly, the second network device receives the seventh information from the third network device.

S312: The second network device sends the data corresponding to the terminal device to the third network device based on the user plane tunnel address information of the third network device.

Optionally, the communication method described in Example 2 may further include subsequent handover phases such as a 3^{rd} handover phase and a 4^{th} handover phase. A procedure of any subsequent handover phase is similar to that of the 2^{nd} handover phase. Details are not described again.

For specific descriptions of the communication method described in Example 2, refer to related descriptions of the communication method 100. Details are not described again.

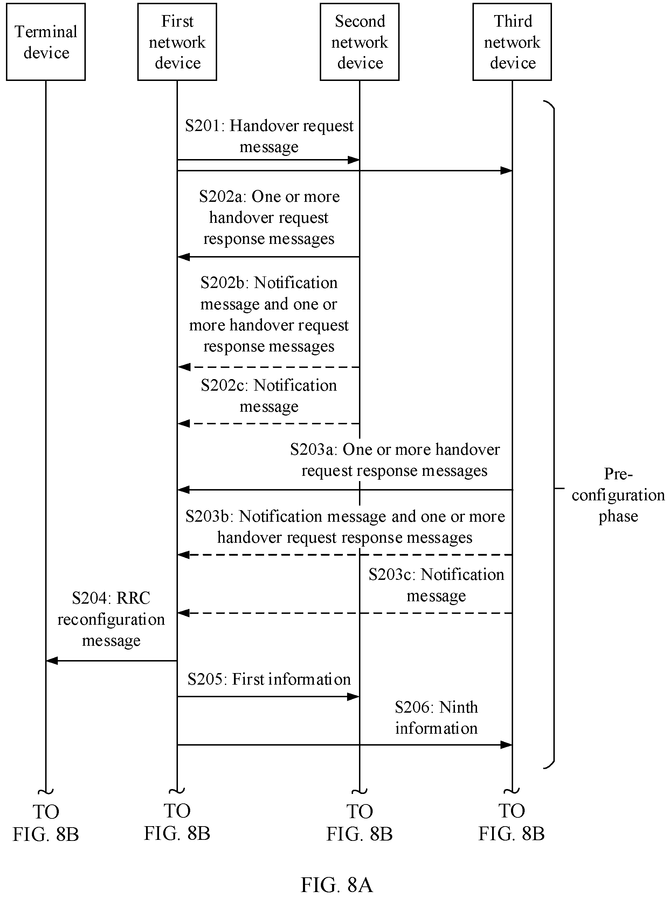

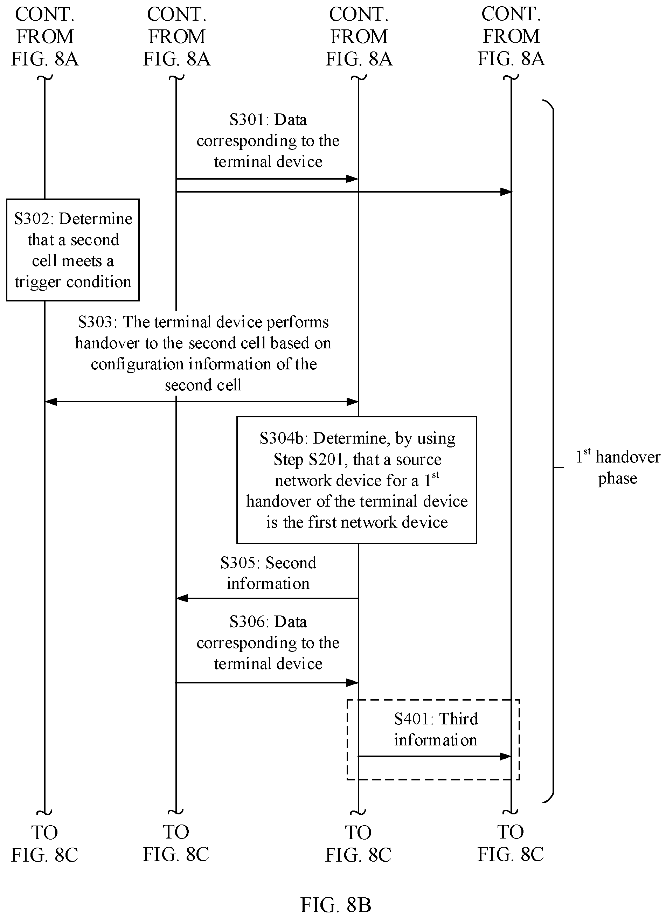

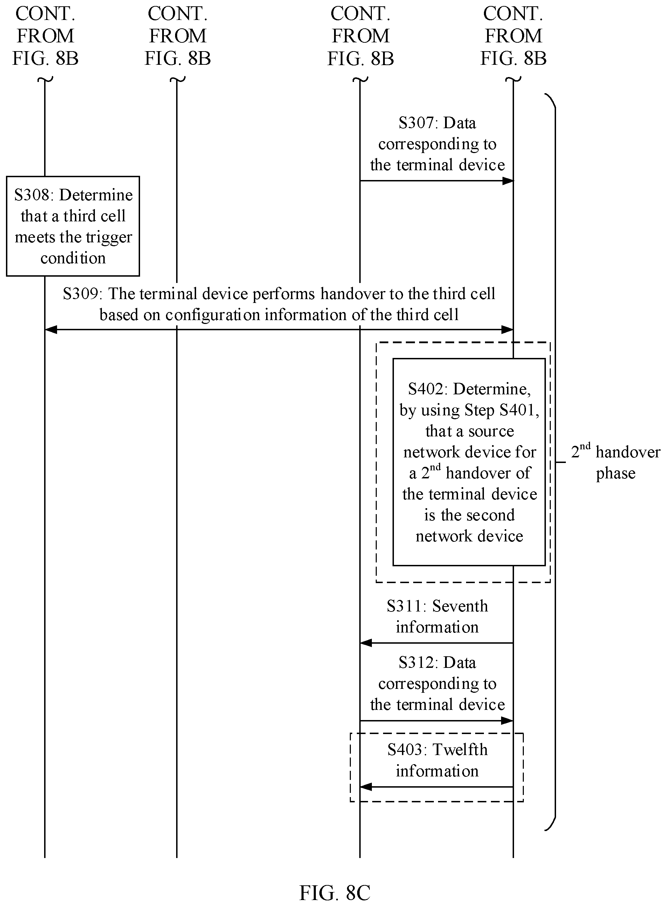

Example 3: With reference to FIG. 8A to FIG. 8C, as shown in dashed boxes in FIG. 8A to FIG. 8C, differences between the communication method described in Example 3 and the communication method described in Example 2 are as follows:
(1) A 1^{st} handover phase in the communication method described in Example 3 includes Steps S301 to S303, S304b, S305, S306, and S401.

There is a difference between S304b included in Example 3 and S304b included in Example 2. The difference lies in that: In S304b included in Example 3, when a terminal device has accessed a second network device, the second network device determines, based on a case in which a handover request message sent by a first network device has been received and a message indicating an identity of a serving network device of the terminal device has not been received, that a source network device for a 1^{st} handover of the terminal device is the first network device.

In addition, S401: The second network device sends third information to a third network device when the terminal device has been handed over from the first network device to the second network device, where the third information indicates that a network device currently serving the terminal device is the second network device.

(2) In a 2^{nd} handover phase included in the communication method described in Example 3, S310 is not included, S310 is replaced with S402, and S403 is further included.

S402: The third network device determines, by using Step S401, that a source network device for a 2^{nd} handover of the terminal device is the second network device.

It may be understood that, when the terminal device has accessed the third network device, the third network device determines, based on a case in which the third information has been received, that the source network device for the 2^{nd} handover of the terminal device is the second network device.

S403: The third network device sends twelfth information to the second network device when the terminal device has been handed over from the second network device to the third network device, where the twelfth information indicates that the network device currently serving the terminal device is the third network device.

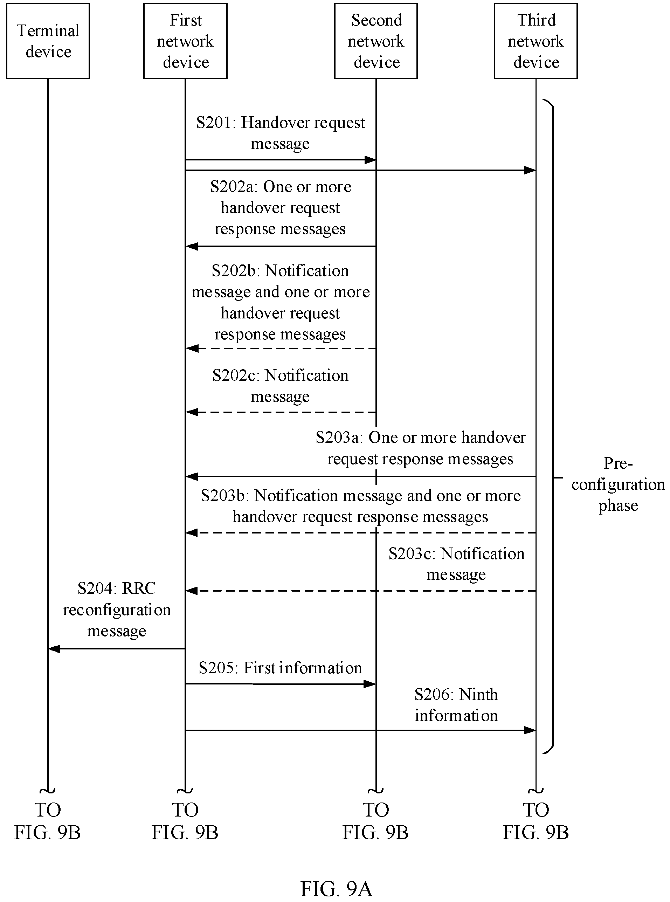

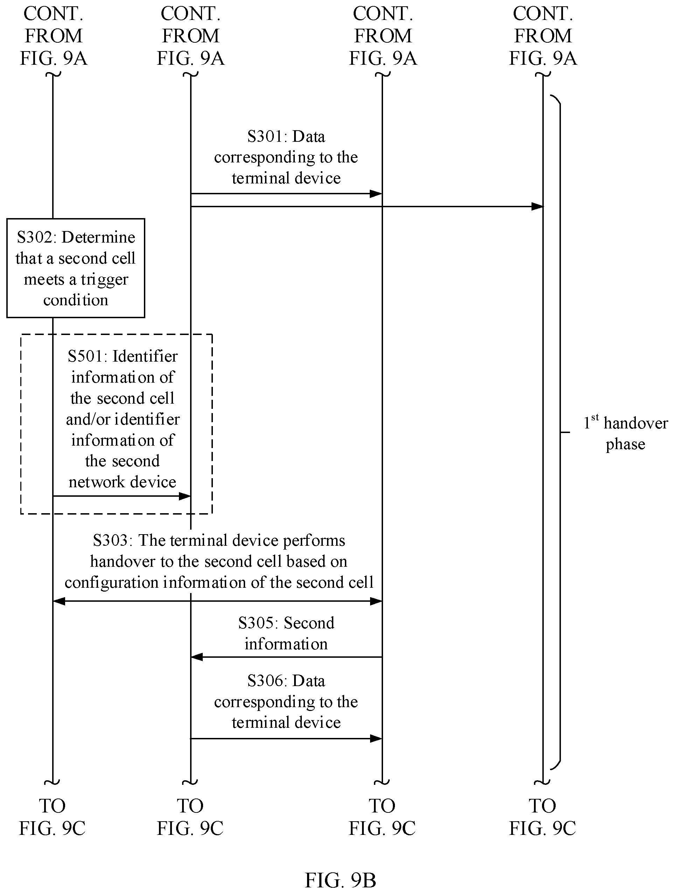

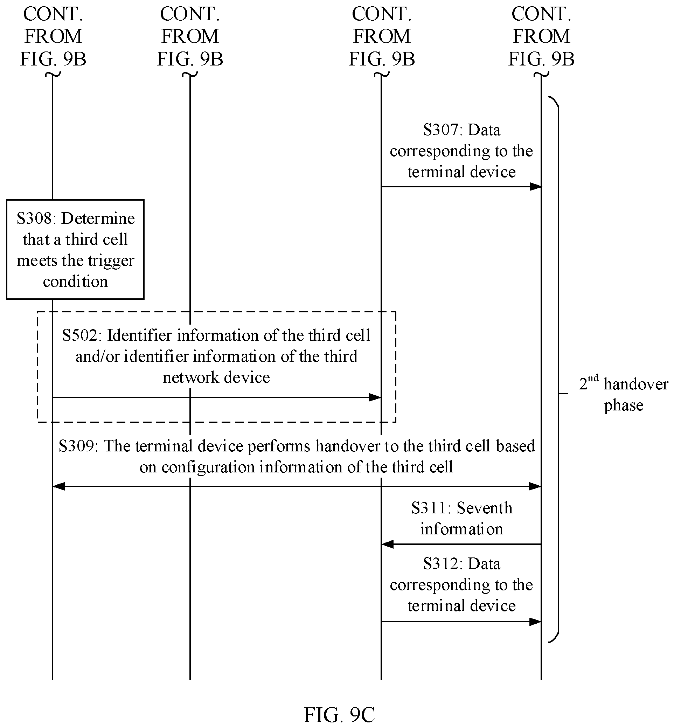

Example 4: With reference to FIG. 9A to FIG. 9C, as shown in dashed boxes in FIG. 9A to FIG. 9C, differences between the communication method described in Example 4 and the communication method described in Example 2 are as follows:
(1) A 1^{st} handover phase in the communication method described in Example 3 includes Steps S301, S302, S501, S303, S305, and S306. S305 is an optional step.
   S501: A terminal device sends identifier information of a second cell and/or identifier information of a second network device to a first network device.
(2) A 2^{nd} handover phase in the communication method described in Example 3 includes Steps S307, S308, S502, S309, S311, and S312. S311 is an optional step.

S502: The terminal device sends identifier information of a third cell and/or identifier information of the third network device to the second network device.

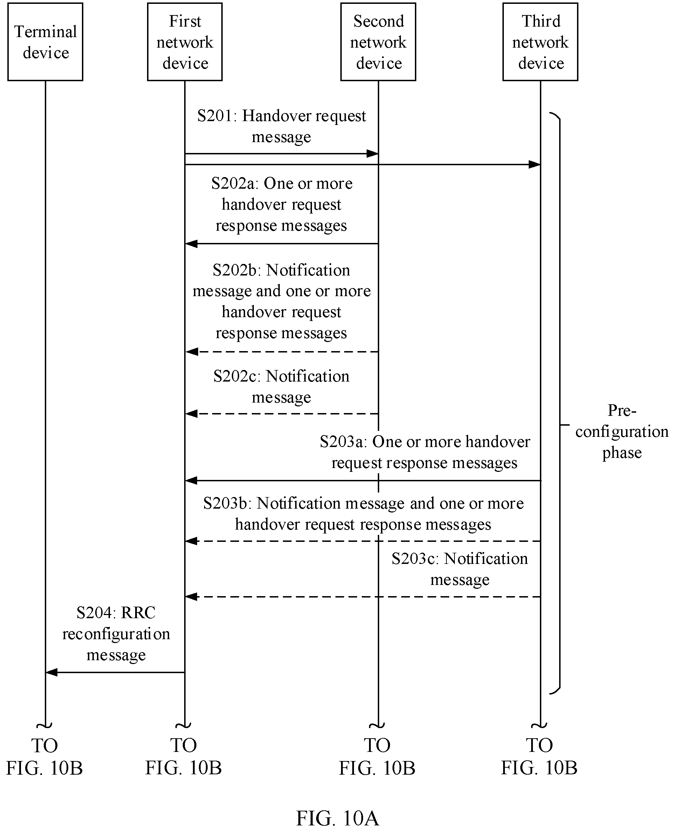

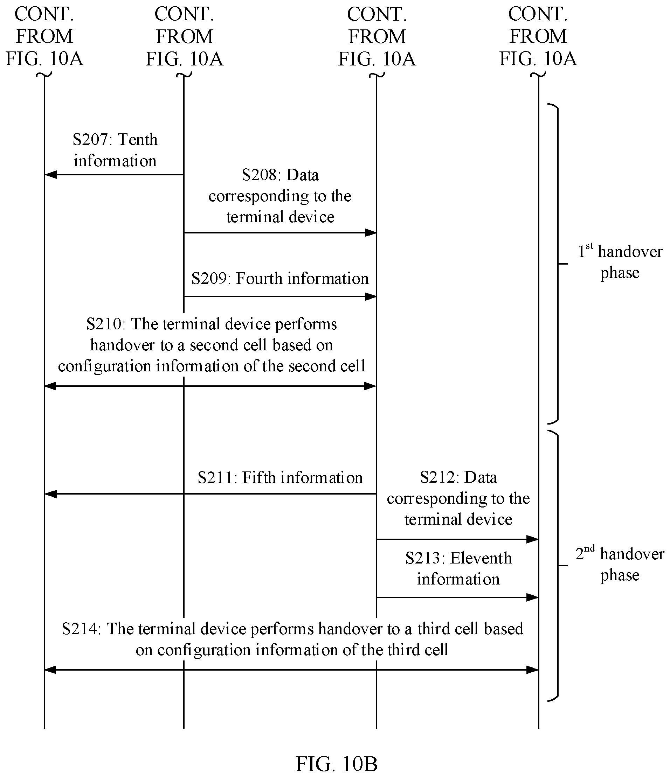

Example 5: With reference to FIG. 10A and FIG. 10B, differences between the communication method described in Example 5 and the communication method described in Example 1 are as follows:
(1) A pre-configuration phase in the communication method described in Example 5 does not include Steps S205 and S206.
(2) In a 1^{st} handover phase included in the communication method described in Example 5, fourth information sent by a first network device to a second network device in Step S209 further includes user plane tunnel address information of a third network device.
(3) In a 2^{nd} handover phase included in the communication method described in Example 5, eleventh information sent by the second network device to the third network device in Step S213 further includes user plane tunnel address information of the second network device.

Example 6: Differences between the communication method described in Example 6 and the communication method described in Example 2, Example 3, or Example 4 lies in that:
(1) A pre-configuration phase in the communication method described in Example 6 does not include Steps S205 and S206.
(2) In a 1^{st} handover phase included in the communication method described in Example 6, after Step S305, the method further includes Step S205.
(3) In a 2^{nd} handover phase included in the communication method described in Example 6, after Step S311, the method further includes Step S601.

S601: A second network device sends ninth information to a third network device, where the ninth information includes user plane tunnel address information of the second network device, and identifier information of the second network device or identifier information of each of one or more cells managed by the second network device. Correspondingly, the third network device receives the ninth information from the second network device.

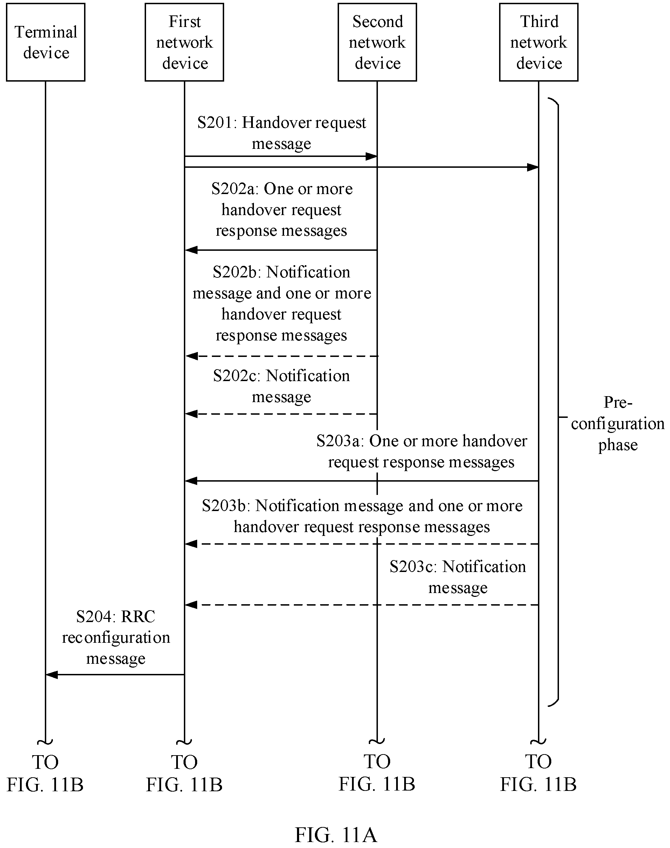

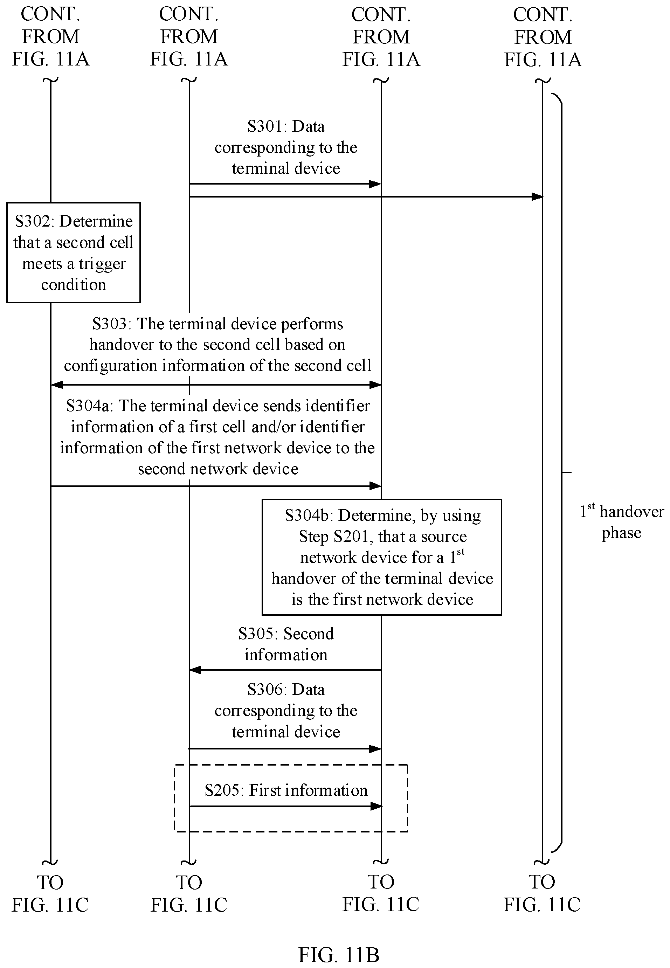

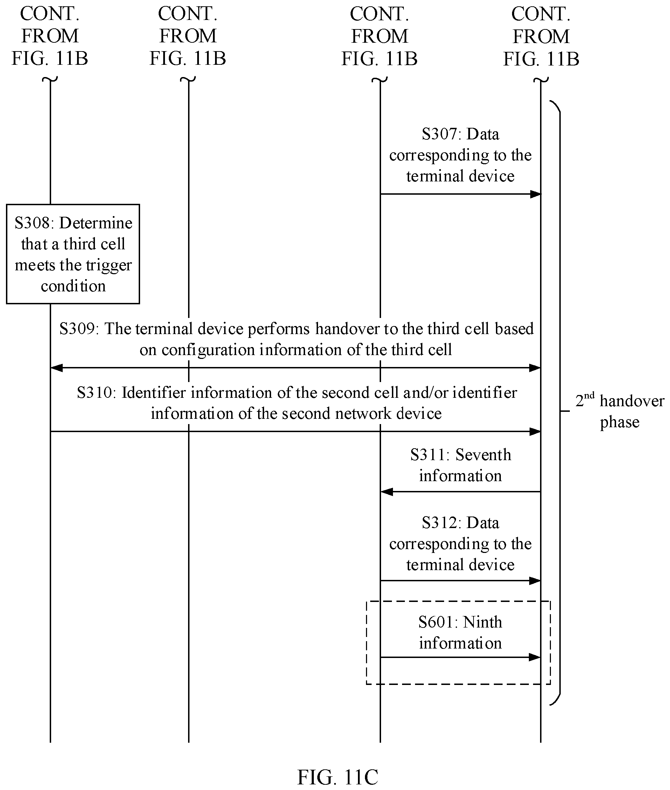

FIG. 11A to FIG. 11C use an example in which Example 6 is compared with Example 2 for illustration. Differences between Example 6 and Example 2 is shown by dashed boxes in FIG. 11A to FIG. 11C.

Example 7: Differences between the communication method described in Example 7 and the communication method described in Example 2, Example 3, or Example 4 lies in that:
(1) A pre-configuration phase in the communication method described in Example 7 does not include Steps S205 and S206.
(2) In the communication method described in Example 7, a 1^{st} handover phase does not include S301. Optionally, second information in Step S305 includes user plane tunnel address information of a second network device.
(3) In the communication method described in Example 7, a 2^{nd} handover phase does not include S307, and seventh information in Step S311 includes the user plane tunnel address information of the second network device.

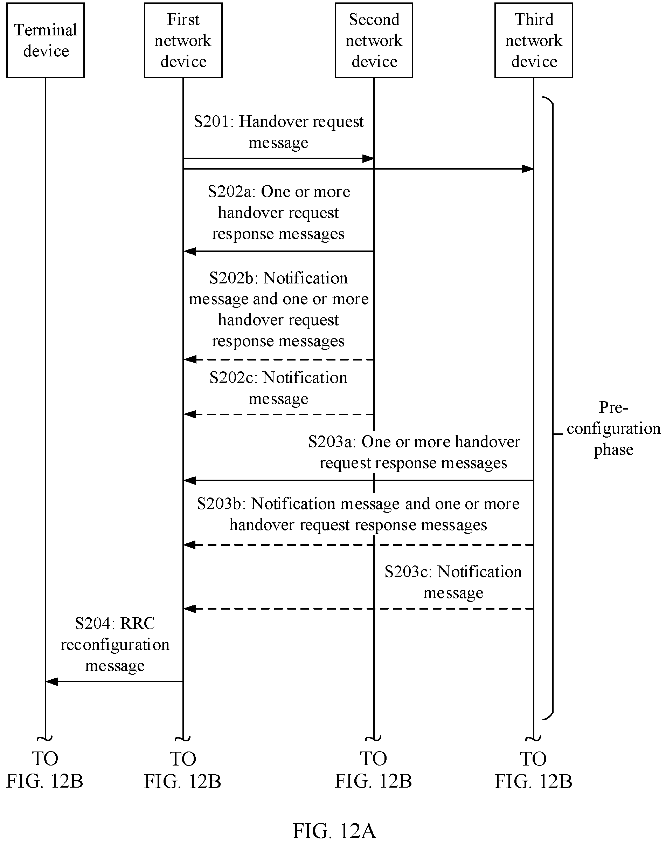

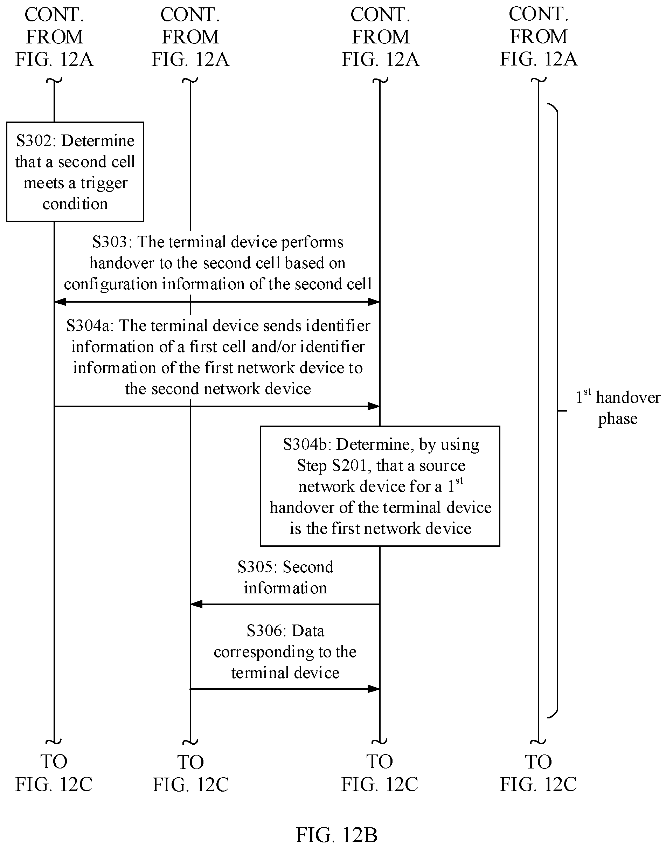

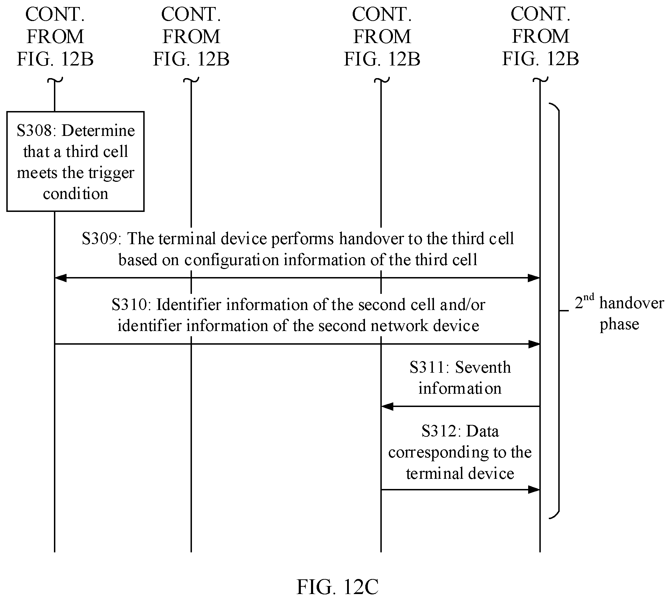

FIG. 12A to FIG. 12C use an example in which Example 7 is compared with Example 2 for illustration.

To implement functions in the foregoing methods provided in embodiments of this application, the network element/device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

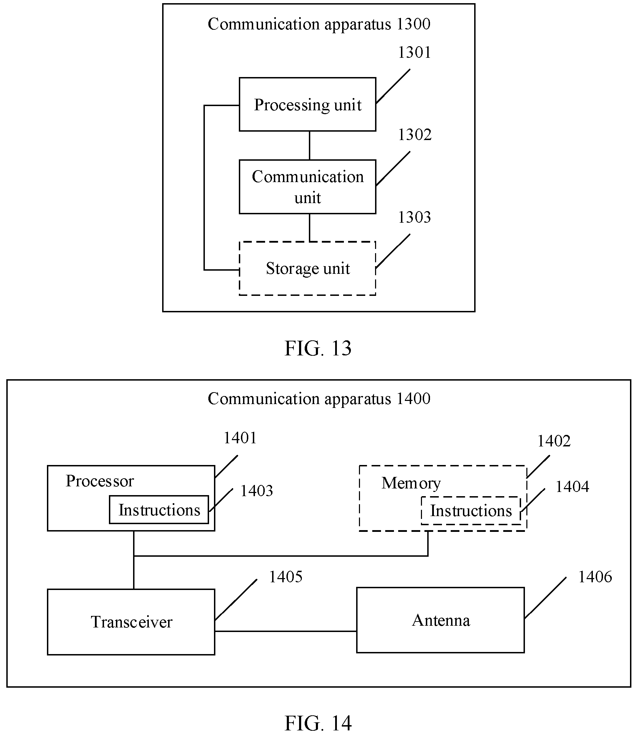

As shown in FIG. 13, an embodiment of this application provides a communication apparatus 1300. The communication apparatus 1300 may be a first network device or a second network device, or may be a component (for example, an integrated circuit or a chip) of the first network device, or may be a component (for example, an integrated circuit or a chip) of the second network device. The communication apparatus 1300 may alternatively be another communication unit, configured to implement the methods in the method embodiments of this application. The communication apparatus 1300 may include a processing unit 1301. Optionally, the communication apparatus 1300 may further include a communication unit 1302. The processing unit 1301 is configured to control the communication unit 1302 to perform data/signaling receiving and sending. The communication unit 1302 may also be referred to as a transceiver unit. Optionally, the communication unit 1302 may include a sending unit and a receiving unit. The sending unit may be configured to send data/signaling, and the receiving unit may be configured to receive data/signaling. Optionally, the communication apparatus 1300 may further include a storage unit 1303. The storage unit 1303 may be configured to store information and/or data and/or instructions, and/or the like. The storage unit 1303 may interact with the processing unit 1301, or may interact with the communication unit 1302.

In a possible design, for a case in which the communication apparatus 1300 is configured to implement a function of the second network device in the foregoing method embodiments:
the communication unit 1302 is configured to receive user plane tunnel address information of a third network device from a first network device; and the communication unit 1302 is further configured to send data corresponding to a terminal device to the third network device based on the user plane tunnel address information of the third network device. The first network device is a source network device for a 1^{st} handover of the terminal device, the communication apparatus 1300 is a target network device for the 1^{st} handover of the terminal device, and the third network device is a target network device for a 2^{nd} handover of the terminal device.

In an optional implementation, the user plane tunnel address information of the third network device includes user plane tunnel address information corresponding to each of one or more cells managed by the third network device.

In an optional implementation, the user plane tunnel address information of the third network device is carried in first information. The first information further includes identifier information of the third network device or identifier information of each of the one or more cells managed by the third network device.

In an optional implementation, the first network device and the third network device are a same network device.

In an optional implementation, the communication unit 1302 is further configured to receive identifier information of a first cell and/or identifier information of the first network device from the terminal device, where the first cell is a source cell for the 1^{st} handover of the terminal device. The communication unit 1302 is further configured to send second information to the first network device, where the second information indicates that the terminal device has been handed over from the first network device to the communication apparatus 1300.

In an optional implementation, the communication unit 1302 is further configured to send third information to the third network device when the terminal device has been handed over from the first network device to the communication apparatus 1300. The third information indicates that a network device currently serving the terminal device is the communication apparatus 1300.

In an optional implementation, the user plane tunnel address information of the third network device is carried in fourth information. The fourth information is for notifying the communication apparatus 1300 that the terminal device is about to be handed over from the first network device to the communication apparatus 1300.

In an optional implementation, the processing unit 1301 is configured to: before the communication unit 1302 sends the data corresponding to the terminal device to the third network device based on the user plane tunnel address information of the third network device, determine that the terminal device is about to be handed over from the communication apparatus 1300 to the third network device, or determine that the terminal device has been handed over from the communication apparatus 1300 to the third network device.

In an optional implementation, the processing unit 1301 determines that the terminal device is about to be handed over from the communication apparatus 1300 to the third network device, and is specifically configured to: when determining that fifth information has been sent to the terminal device, determine that the terminal device is about to be handed over from the communication apparatus 1300 to the third network device. The fifth information indicates the terminal device to perform handover to a third cell, and the third cell is a target cell for the 2^{nd} handover of the terminal device.

In an optional implementation, the processing unit 1301 determines that the terminal device is about to be handed over from the communication apparatus 1300 to the third network device, and is specifically configured to: when receiving sixth information from the terminal device, determine that the terminal device is about to be handed over from the communication apparatus 1300 to the third network device. The sixth information indicates that the terminal device is about to be handed over from the communication apparatus 1300 to the third network device.

In an optional implementation, the sixth information includes identifier information of a third cell and/or identifier information of the third network device, and the third cell is the target cell for the 2^{nd} handover of the terminal device.

In an optional implementation, the processing unit 1301 determines that the terminal device has been handed over from the communication apparatus 1300 to the third network device, and is specifically configured to: when receiving seventh information from the third network device, determine that the terminal device has been handed over from the communication apparatus 1300 to the third network device. The seventh information indicates that the terminal device has been handed over from the communication apparatus 1300 to the third network device.

In an optional implementation, the communication unit 1302 is further configured to: when the terminal device has been handed over to the communication apparatus 1300, the second network device sends the data corresponding to the terminal device to the third network device based on the user plane tunnel address information of the third network device.

In another possible design, for a case in which the communication apparatus 1300 is configured to implement a function of the first network device in the foregoing method embodiments:
the processing unit 1301 is configured to obtain user plane tunnel address information of a third network device; and the communication unit 1302 is configured to send the user plane tunnel address information of the third network device to a second network device, where the user plane tunnel address information of the third network device is for data forwarding during a 2^{nd} handover of a terminal device. The communication apparatus 1300 is a source network device for a 1^{st} handover of the terminal device, the second network device is a target network device for the 1^{st} handover of the terminal device, and the third network device is a target network device for the 2^{nd} handover of the terminal device.

In an optional implementation, the user plane tunnel address information of the third network device includes user plane tunnel address information corresponding to each of one or more cells managed by the third network device.

In an optional implementation, the user plane tunnel address information of the third network device is carried in first information. The first information further includes identifier information of the third network device or identifier information of each of the one or more cells managed by the third network device.

In an optional implementation, the communication apparatus 1300 and the third network device are a same network device. The processing unit 1301 obtains the user plane tunnel address information of the third network device, and is specifically configured to locally obtain the user plane tunnel address information of the third network device.

In an optional implementation, the communication apparatus 1300 and the third network device are different network devices. The processing unit 1301 obtains the user plane tunnel address information of the third network device, and is specifically configured to receive, through the communication unit 1302, the user plane tunnel address information of the third network device that is sent by the third network device.

In an optional implementation, the communication unit 1302 is further configured to receive user plane tunnel address information of the second network device that is sent by the second network device. The communication unit 1302 is further configured to send the user plane tunnel address information of the second network device to the third network device. The user plane tunnel address information of the second network device is for data forwarding during a 3^{rd} handover of the terminal device. A target network device for the 3^{rd} handover of the terminal device is the second network device.

In an optional implementation, the communication unit 1302 is further configured to receive eighth information from the terminal device. The eighth information indicates that the terminal device is about to be handed over from the communication apparatus 1300 to the second network device. The communication unit 1302 is further configured to send data corresponding to the terminal device to the second network device based on the user plane tunnel address information of the second network device.

In an optional implementation, the eighth information includes identifier information of a second cell and/or identifier information of the second network device, and the second cell is a target cell for the 1^{st} handover of the terminal device.

In an optional implementation, the communication unit 1302 is further configured to: before sending the user plane tunnel address information of the third network device to the second network device, receive second information from the second network device. The second information indicates that the terminal device has been handed over from the communication apparatus 1300 to the second network device.

In an optional implementation, the user plane tunnel address information of the third network device is carried in fourth information. The fourth information is for notifying the second network device that the terminal device is about to be handed over from the communication apparatus 1300 to the second network device.

This embodiment of this application and the foregoing method embodiments are based on a same concept, and bring same technical effect. For a specific principle, refer to descriptions in the foregoing embodiments. Details are not described again.

An embodiment of this application further provides a communication apparatus 1400, as shown in FIG. 14. The communication apparatus 1400 may be a first network device or a second network device, or may be a chip, a chip system, a processor, or the like that supports the first network device or the second network device in implementing the foregoing methods. The apparatus may be configured to implement the methods described in the foregoing method embodiments. For details, refer to descriptions in the foregoing method embodiments.

The communication apparatus 1400 includes one or more processors 1401. The processor 1401 may be configured to implement a part or all of functions of the first network device or the second network device by using a logic circuit or by running a computer program. The processor 1401 may be a general-purpose processor, a dedicated processor, or the like. For example, the processor 1401 may be a baseband processor, a digital signal processor, an application-specific integrated circuit, a field programmable gate array or another programmable logic device, a discrete gate or a transistor logic device, or a discrete hardware component or a CPU. The baseband processor may be configured to process a communication protocol and communication data. A central processing unit may be configured to: control the communication apparatus, execute a software program, and process data of the software program. The communication apparatus is, for example, a base station, a baseband chip, a terminal, a terminal chip, a distributed unit (distributed unit, DU), or a central unit (central unit, CU).

Optionally, the communication apparatus 1400 may include one or more memories 1402. The memory may store instructions 1404. The instructions may be run on the processor 1401, to enable the communication apparatus 1400 to perform the methods described in the foregoing method embodiments. Optionally, the memory 1402 may further store data. The processor 1401 and the memory 1402 may be separately disposed, or may be integrated.

The memory 1402 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, for a case in which the communication apparatus 1400 is configured to implement a function of the second network device in the foregoing method embodiments:
the transceiver 1405 is configured to receive user plane tunnel address information of a third network device from a first network device; and the transceiver 1405 is further configured to send data corresponding to a terminal device to the third network device based on the user plane tunnel address information of the third network device. The first network device is a source network device for a 1^{st} handover of the terminal device, the communication apparatus 1400 is a target network device for the 1^{st} handover of the terminal device, and the third network device is a target network device for a 2^{nd} handover of the terminal device.

In another possible design, for a case in which the communication apparatus 1400 is configured to implement a function of the first network device in the foregoing method embodiments:
the processor 1401 is configured to obtain user plane tunnel address information of a third network device; and the transceiver 1405 is configured to send the user plane tunnel address information of the third network device to a second network device, where the user plane tunnel address information of the third network device is for data forwarding during a 2^{nd} handover of a terminal device. The communication apparatus 1400 is a source network device for a 1^{st} handover of the terminal device, the second network device is a target network device for the 1^{st} handover of the terminal device, and the third network device is a target network device for the 2^{nd} handover of the terminal device.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1401 may store instructions 1403. The instructions 1403 are run on the processor 1401, to enable the communication apparatus 1400 to perform the methods described in the foregoing method embodiments. The instructions 1403 may be fixed in the processor 1401. In this case, the processor 1401 may be implemented by using hardware.

In another possible design, the communication apparatus 1400 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the transceiver may alternatively be produced by using various IC technologies, for example, a complementary metal oxide semiconductor (complementary metal oxide semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the functions for a particular application, but it should not be considered that the implementation goes beyond the scope of embodiments of this application.

This embodiment of this application and the foregoing method embodiments are based on a same concept, and bring same technical effect. For a specific principle, refer to descriptions in the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program runs on a computer, a function in any one of the foregoing method embodiments is implemented.

This application further provides a chip. The chip includes a processor. The processor is configured to execute code or instructions, to implement a function in any one of the foregoing method embodiments. Optionally, the chip further includes an interface. The processor is coupled to the interface. The interface is configured to receive or output a signal.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that is accessed by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In addition, in this application, unless otherwise stated or there is a logic conflict, terms and/or descriptions between different embodiments are consistent and may be mutually referenced, and technical features in different embodiments may be combined into a new embodiment based on an internal logic relationship thereof.

It may be understood that some optional features in embodiments of this application may be independent of another feature in some scenarios, or may be combined with the another feature in some scenarios. This is not limited.

It may be understood that solutions in embodiments of this application may be used in combination, and explanations or descriptions of terms and similar operations or steps in embodiments may be mutually referenced or explained in embodiments. This is not limited in this application.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

In this application, "first", "second", and various numbers are used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.

In this application, the terms "include", "have", and any other variants thereof are intended to cover non-exclusive inclusion. For example, a process, method, system, product, or device that includes a list of steps or units is not necessarily limited to those clearly listed steps or units, but may include other steps or units that are not clearly listed or inherent to the process, method, product, or device.

In this application, "indicating" may include "directly indicating" and "indirectly indicating". When a piece of indication information indicates A, the indication information may directly indicate A or indirectly indicate A, but it does not indicate that the indication information definitely carries A.

In this application, "sending information to an XX (a device/network element)" may be understood as that a destination of the information is the device/network element, and may include directly or indirectly sending the information to the device/network element. "Receiving information from an XX (a device/network element) or receiving the information that is from the XX (the device/network element)" may be understood as that a source of the information is the device/network element, and may include directly or indirectly receiving the information from the device/network element. Necessary processing, for example, a format change, may be performed on the information when the information is sent between the source end and the destination end, and the destination end can understand valid information from the source end.

In this application, the term "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

## Claims

1. A communication method, wherein the method comprises:
receiving, by a second network device, user plane tunnel address information of a third network device from a first network device; and
sending, by the second network device, data corresponding to a terminal device to the third network device based on the user plane tunnel address information of the third network device, wherein
the first network device is a source network device for a 1^{st} handover of the terminal device, the second network device is a target network device for the 1^{st} handover of the terminal device, and the third network device is a target network device for a 2^{nd} handover of the terminal device.

2. The method according to claim 1, wherein
the user plane tunnel address information of the third network device comprises user plane tunnel address information corresponding to each of one or more cells managed by the third network device.

3. The method according to claim 1 or 2, wherein
the user plane tunnel address information of the third network device is carried in first information; and
the first information further comprises identifier information of the third network device or identifier information of each of the one or more cells managed by the third network device.

4. The method according to any one of claims 1 to 3, wherein the first network device and the third network device are a same network device.

5. The method according to any one of claims 1 to 4, wherein the method further comprises:
receiving, by the second network device, identifier information of a first cell and/or identifier information of the first network device from the terminal device, wherein the first cell is a source cell for the 1^{st} handover of the terminal device; and
sending, by the second network device, second information to the first network device, wherein the second information indicates that the terminal device has been handed over from the first network device to the second network device.

6. The method according to any one of claims 1 to 4, wherein the method further comprises:
sending, by the second network device, third information to the third network device when the terminal device has been handed over from the first network device to the second network device, wherein the third information indicates that a network device currently serving the terminal device is the second network device.

7. The method according to any one of claims 1 to 4, wherein
the user plane tunnel address information of the third network device is carried in fourth information; and
the fourth information is for notifying the second network device that the terminal device is about to be handed over from the first network device to the second network device.

8. The method according to any one of claims 1 to 7, wherein before sending, by the second network device, the data corresponding to the terminal device to the third network device based on the user plane tunnel address information of the third network device, the method further comprises:
determining, by the second network device, that the terminal device is about to be handed over from the second network device to the third network device; or
determining, by the second network device, that the terminal device has been handed over from the second network device to the third network device.

9. The method according to claim 8, wherein determining, by the second network device, that the terminal device is about to be handed over from the second network device to the third network device comprises:
when the second network device has sent fifth information to the terminal device, determining, by the second network device, that the terminal device is about to be handed over from the second network device to the third network device, wherein
the fifth information indicates the terminal device to perform handover to a third cell, and the third cell is a target cell for the 2^{nd} handover of the terminal device.

10. The method according to claim 8, wherein determining, by the second network device, that the terminal device is about to be handed over from the second network device to the third network device comprises:
when the second network device has received sixth information from the terminal device, determining, by the second network device, that the terminal device is about to be handed over from the second network device to the third network device, wherein
the sixth information indicates that the terminal device is about to be handed over from the second network device to the third network device.

11. The method according to claim 10, wherein
the sixth information comprises identifier information of a third cell and/or the identifier information of the third network device, and the third cell is a target cell for the 2^{nd} handover of the terminal device.

12. The method according to claim 8, wherein determining, by the second network device, that the terminal device has been handed over from the second network device to the third network device comprises:
when the second network device has received seventh information from the third network device, determining, by the second network device, that the terminal device has been handed over from the second network device to the third network device, wherein
the seventh information indicates that the terminal device has been handed over from the second network device to the third network device.

13. The method according to any one of claims 1 to 7, 10, 11, and 12, wherein the method further comprises:
when the terminal device has been handed over to the second network device, sending, by the second network device, the data corresponding to the terminal device to the third network device based on the user plane tunnel address information of the third network device.

14. A communication method, wherein the method comprises:
obtaining, by a first network device, user plane tunnel address information of a third network device; and
sending, by the first network device, the user plane tunnel address information of the third network device to a second network device, wherein the user plane tunnel address information of the third network device is for data forwarding during a 2^{nd} handover of a terminal device, wherein
the first network device is a source network device for a 1^{st} handover of the terminal device, the second network device is a target network device for the 1^{st} handover of the terminal device, and the third network device is a target network device for the 2^{nd} handover of the terminal device.

15. The method according to claim 14, wherein
the user plane tunnel address information of the third network device comprises user plane tunnel address information corresponding to each of one or more cells managed by the third network device.

16. The method according to claim 14 or 15, wherein
the user plane tunnel address information of the third network device is carried in first information; and
the first information further comprises identifier information of the third network device or identifier information of each of the one or more cells managed by the third network device.

17. The method according to any one of claims 14 to 16, wherein the first network device and the third network device are a same network device; and obtaining, by the first network device, the user plane tunnel address information of the third network device comprises:
locally obtaining, by the first network device, the user plane tunnel address information of the third network device.

18. The method according to any one of claims 14 to 16, wherein the first network device and the third network device are different network devices; and obtaining, by the first network device, the user plane tunnel address information of the third network device comprises:
receiving, by the first network device, the user plane tunnel address information of the third network device that is sent by the third network device.

19. The method according to claim 18, wherein the method further comprises:
receiving, by the first network device, user plane tunnel address information of the second network device sent by the second network device; and
sending, by the first network device, the user plane tunnel address information of the second network device to the third network device, wherein the user plane tunnel address information of the second network device is for data forwarding during a 3^{rd} handover of the terminal device, wherein
a target network device for the 3^{rd} handover of the terminal device is the second network device.

20. The method according to any one of claims 14 to 19, wherein the method further comprises:
receiving, by the first network device, eighth information from the terminal device, wherein the eighth information indicates that the terminal device is about to be handed over from the first network device to the second network device; and
sending, by the first network device, data corresponding to the terminal device to the second network device based on the user plane tunnel address information of the second network device.

21. The method according to claim 20, wherein
the eighth information comprises identifier information of a second cell and/or identifier information of the second network device, and the second cell is a target cell for the 1^{st} handover of the terminal device.

22. The method according to any one of claims 14 to 19, wherein before sending, by the first network device, the user plane tunnel address information of the third network device to the second network device, the method further comprises:
receiving, by the first network device, second information from the second network device, wherein the second information indicates that the terminal device has been handed over from the first network device to the second network device.

23. The method according to any one of claims 14 to 19, wherein
the user plane tunnel address information of the third network device is carried in fourth information; and
the fourth information is for notifying the second network device that the terminal device is about to be handed over from the first network device to the second network device.

24. A communication apparatus, wherein the apparatus comprises a module or unit configured to implement the method according to any one of claims 1 to 13, or configured to implement the method according to any one of claims 14 to 23.

25. A communication apparatus, comprising a processor, wherein
the processor is configured to execute a computer program or instructions, to enable the communication apparatus to perform the method according to any one of claims 1 to 13, or to perform the method according to any one of claims 14 to 23.

26. A computer-readable storage medium, wherein the computer-readable storage medium stores a computer program, and when the computer program is run, the method according to any one of claims 1 to 13 is implemented, or the method according to any one of claims 14 to 23 is implemented.

27. A computer program product, wherein the computer program product comprises computer program code, and when the computer program code is run, the method according to any one of claims 1 to 13 is implemented, or the method according to any one of claims 14 to 23 is implemented.
